Europäisches Patentamt

European Patent Office

Office européen des brevets

(19)

(11) **EP 1 341 332 A1**

(12) **EUROPEAN PATENT APPLICATION**
published in accordance with Art. 158(3) EPC

(43) Date of publication:
**03.09.2003 Bulletin 2003/36**

(51) Int Cl.⁷: **H04J 11/00**

(21) Application number: **00979093.2**

(22) Date of filing: **05.12.2000**

(86) International application number:
**PCT/JP00/08598**

(87) International publication number:
**WO 02/047304 (13.06.2002 Gazette 2002/24)**

(84) Designated Contracting States:
**DE FR GB**

(71) Applicant: **FUJITSU LIMITED**
**Kawasaki-shi, Kanagawa 211-8588 (JP)**

(72) Inventors:
• **KAKU, Takashi, Fujitsu Limited**
**Kawasaki-shi, Kanagawa 211-8588 (JP)**

• **MURATA, Hiroyasu, Fujitsu Limited**
**Kawasaki-shi, Kanagawa 211-8588 (JP)**

(74) Representative: **HOFFMANN - EITLE**
**Patent- und Rechtsanwälte**
**Arabellastrasse 4**
**81925 München (DE)**

(54) **DATA TRANSMISSION METHOD AND APPARATUS**

(57)     In a method and an apparatus for a data transmission in transmission media which vary depending on noises from outside, connected apparatuses, connection methods such as multi-path, or the like, a data transmission (1) in which processing load is light, (2) in which line equalization is easy and which is adaptable to the multi-path, or (3) which is resistant to a noise variation is realized.

A Hadamard multiplexing/distribution, or a quadrature mirror filter multiplexing/distribution is performed. Also, data is multiplexed by using an orthogonal sequence, the multiplexed data is transmitted to a transparent transmission line, and the data received from the transparent transmission line is distributed by using the orthogonal sequence. Also, data is multiplexed by using the orthogonal sequence, the multiplexed data is interleaved on a frequency axis and a time axis, the interleaved multiplexed data is multiplexed by using the orthogonal sequence, the multiplexed data is distributed by using the orthogonal sequence, the distributed data is deinterleaved on the frequency axis and the time axis, and the deinterleaved data is distributed by using an orthogonal transform.

FIG. 1

EP 1 341 332 A1

**Description**

Technical Field

The present invention relates to a method and an apparatus for a data transmission, and in particular to a method and an apparatus for a data transmission in transmission media in a variety of modes.

For a data transmission, various transmission media have appeared depending on the applications and purposes. Characteristics of such transmission media are complicatedly varied by characteristics of apparatuses to be connected. Under circumstances of a multi-path for example, a signal outputted from a transmission point is varied by passing through various paths, and is synthesized on a reception point, which leads to variations of its reception level and phase.

Also, some transmission media are accompanied by noises from outside or apparatuses connected. As a result, a data quality transmitted is to be considerably damaged.

In spite of such circumstances, necessities of the method and the apparatus for the data transmission securing high-quality communication have been remarkable in various industrial fields as follows:

- Power-line carrier modem field which aims to realize a high-speed data transmission under circumstances with many noises such as in a power-line carrier;
- CATV modem, ADSL modem, and VDSL modem fields;
- 2.4G wireless LAN, wireless transmission field, optical transmission field, and the like;
- Magnetic disk or optical disk field of a high recording density;
- Multi valued transmission technology by semiconductor;
- Bar code scanner.

Hereinafter, transmission media having the above-mentioned characteristics will be described by taking as an example a data transmission by a power line, while the same applies to the other fields as mentioned above.

A power-line modem has a 100 V/200 V household power line, supplied to a household from a pole transformer, as a transmission line, and is composed of a master set on a pole and a slave set in a user's house.

The master is connected to the slave with a low voltage distribution line between poles, a service wire from the low voltage distribution line to the household, and an interior distribution line. Generally, 5 slaves or so at the maximum are connected to a single master.

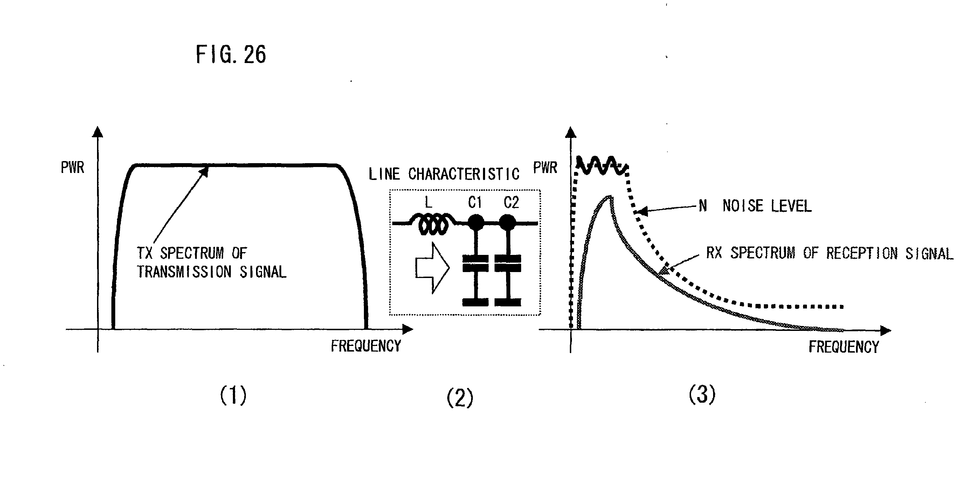

Hereinafter, issues of the data transmission in the power-line modem will be described referring to Fig.26. Fig.26(2) shows a line characteristic of a household power line observed from a master. A low voltage distribution line of 150 m appears to have an inductor L of about 150 $\mu$ H, a service wire of 50 m appears to have a capacitor C1 of about 0.1 $\mu$ F, and an interior distribution line to which capacitors for preventing noises of various household electrical appliances are connected appears to have a capacitor C2.

Consequently, the line characteristic appears to have a low-pass filter. When the master transmits a transmission signal TX having a spectrum shown in Fig.26(1), the slave receives a reception signal RX having a spectrum shown in Fig.26(3) in which a high frequency band greatly attenuates. For this reason, the high frequency band of the reception signal RX is buried in a noise N in the worst case.

On the other hand, the low frequency band of the reception signal RX is also buried in the noise N due to an inverter or the like of e.g. the household electrical appliances, although its attenuations is less compared with that in the high frequency band.

Also, since slaves distributed to a plurality of households are connected to a single master in the power-line modem, issues of multi-path due to a reflection of signals or the like occur in the same way as the wireless transmission case.

Background Art

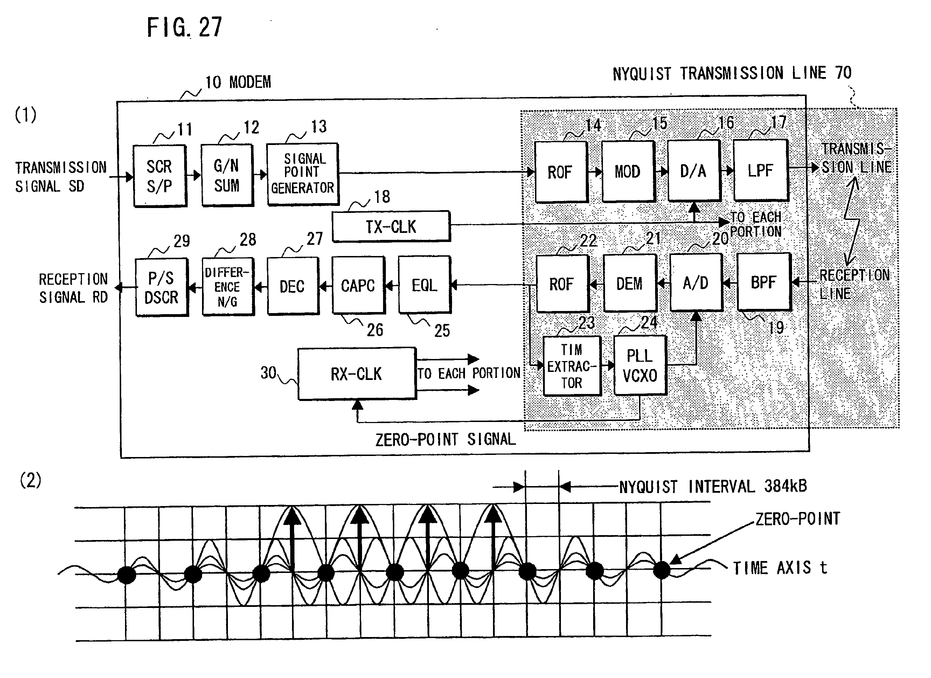

Fig.27(1) shows an arrangement of a prior art data transmission apparatus (modem) 10. This modem 10 performs scrambling a serial transmission signal SD by a scrambler-S/P converter (SCR-S/P) 11 to be converted into a parallel signal.

This parallel signal is converted from a Gray code (G) of which the transmission signal SD is formed into a Natural code (N) which can be calculated by a G/N converter-sum calculator 12. Furthermore, a vector sum calculation corresponding to a difference calculator 28 used for detecting a phase on a reception side is performed to the Natural code (N) to be transmitted to a Nyquist transmission line 70 (hatched portion) from a signal point generator 13.

The Nyquist transmission line 70 corresponds to a transparent transmission line on which, as shown in Fig. 27(2), signals are transmitted with the interval of the transmission signal points being made the Nyquist interval (384 kB in Fig.27(2)).

On the Nyquist transmission line 70, the waveform of the transmission signal is shaped by a roll-off filter (ROF) 14. The output signal of the roll-off filter 14 is modulated by a modulation circuit (MOD) 15 and is further converted into an analog signal from a digital signal by a D/A converter 16. Then, a low-pass filter (LPF) 17 extracts a signal only in a low frequency band including a frequency band (10-450 kHz) of a power carrier wave to be transmitted to the line.

When such a transmission signal is received through a reception line, only predetermined frequency band components (10-450 kHz in case of a power carrier modem) are firstly extracted by a band-pass filter (BPF) 19, and restored to a digital signal by an A/D converter 20.

This digital signal is demodulated into a baseband signal by a demodulation circuit (DEM) 21, and then the waveform is shaped by a roll-off filter (ROF) 22.

The output of the roll-off filter 22 is sent to an equalizer (EQL) 25 and a timing extractor 23. The extractor 23 and a PLL control circuit-Voltage Controlled Crystal Oscillator (PLL-VCXO) 24 extract a timing signal, which is provided to the A/D converter 20 and a reception clock distributor (RX-CLK) 30.

The equalizer 25 removes an intersymbol interference, and a phase adjustment is performed by a carrier automatic phase controller (CAPC) 26. Furthermore, a decision portion (DEC) 27 outputs signal components from which noises are canceled.

A vector difference calculation opposite to the vector sum calculation is performed by the difference calculator-N/G converter (difference-N/G) 28 with the Natural code, and then the Natural code is restored to the Gray code. The parallel Gray code is converted into a serial signal by a P/S converter-descrambler (P/S-DSCR) 29, and descrambling is performed to the signal to be outputted as a reception signal RD.

As conventional technologies for resolving the above-mentioned issues in the modem 10, (1) line equalization and guard time, (2) removal of unnecessary bandwidth, and (3) averaging of noises will now be described with issues thereof.

### (1) Line equalization and guard time

In order to equalize a transmission line which varies complicatedly, there is a multi-carrier transmission system such as a DMT (Discrete MultiTone) system and an OFDM (Orthogonal Frequency Division Multiplexing) system.

In the multi-carrier transmission system, a frequency band in use is divided into a plurality of narrow sub-channels, and in each sub-channel data is transmitted by a Quadrature Amplitude Modulation (hereinafter, abbreviated as QAM) system. A transmission power and a bit number assigned to the transmission data can be independently determined per sub-carrier.

Thus, the multi-carrier system can flexibly accommodate to equalization of a line characteristic in which a signal attenuated frequency characteristic, a noise frequency characteristic, or the like vary complicatedly like a power line. For example, the multi-carrier system removes a carrier band in which noises are prominent, thereby enabling independent accommodation to the equalization per carrier.

Also, in the multi-carrier system, a transmission rate is equivalently reduced by transmitting data in parallel on a plurality of transmission channels, thereby facilitating a provision of a guard time which is a solution to a multi-path issue.

However, both of the DMT system and the OFDM system use IFFT (Inverse Fast Fourier Transform) and FFT (Fast Fourier Transform) technologies, resulting in a heavy load with respect to processing cycle number.

### (2) Removal of unnecessary bandwidth

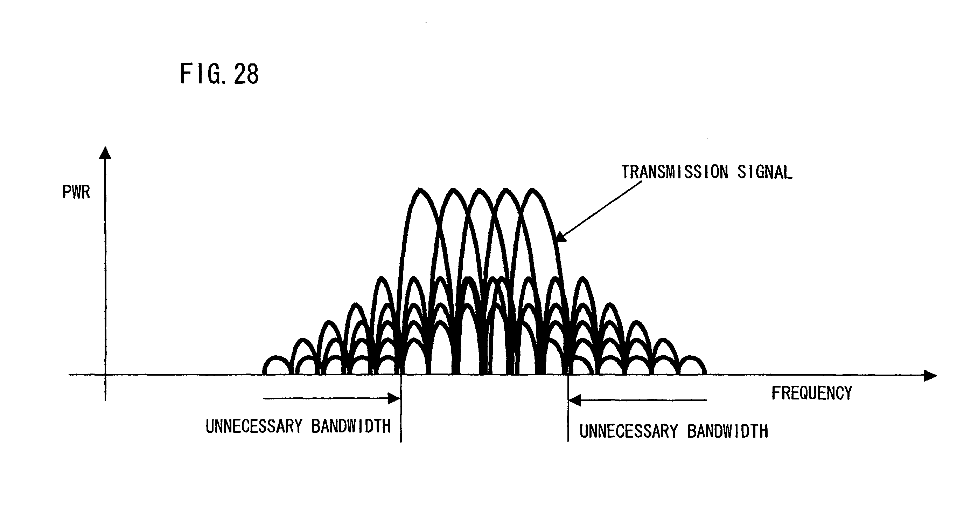

Although an unnecessary bandwidth of a single sub-channel is orthogonal, as shown in Fig.28, at carrier points of regular intervals in a bandwidth of the DMT system and the OFDM system, the unnecessary bandwidth (side lobe) of each sub-channel extends to low and high frequency bands in an attenuating waveform of sinx/x.

It is possible to remove this unnecessary bandwidth by providing a filter outside.

### (3) Averaging of noise

As mentioned above, noises led from outside and noises generated by an apparatus connected to a transmission line are carried on the transmission line. As a system for reducing this noise, there are integration or averaging on a frequency axis in a QAM transmission line, averaging on a time axis/frequency axis in a spread spectrum system, or the like.

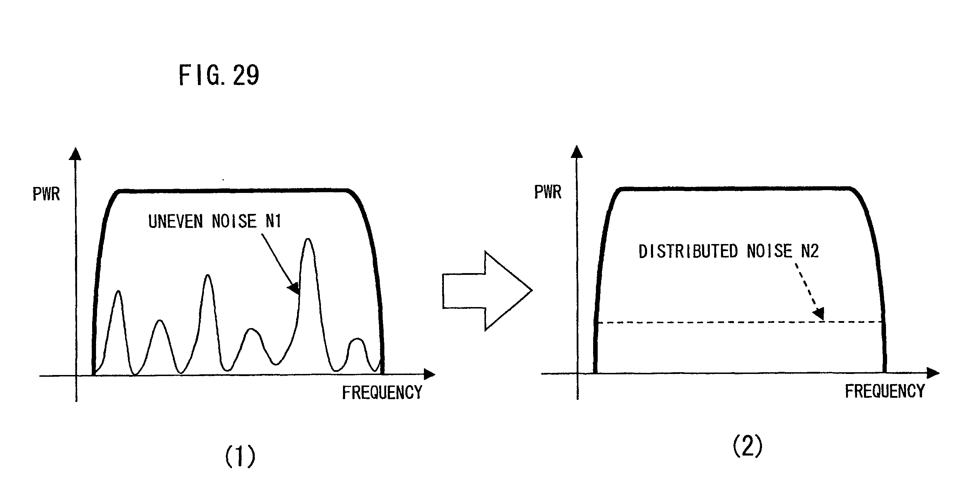

This averaging of noises will now be described referring to a schematic diagram shown in Fig.29.

Fig.29(1) shows a noise N1 on a reception signal RX, where noises of different intensities depending on the frequency band arise, and a larger noise locally arises. Generally, it is possible to correct a bit error of data, which the noise N1 has generated, by an error correcting code such as Reed-Solomon code. However, when the number of error bits is large locally, the ability of correcting errors is exceeded, which disables the correction.

A conventional technology to deal with such an issue includes averaging of noises called interleave (interleaving). In this technology, the transmission side rearranges the transmission data at random to be transmitted, and the reception side receives the reception signal RX including an uneven noise N1 as shown in Fig.29(1). The reception side rearranges the received data to be restored to the original data. At this time, burst errors or the like due to the noise N1 are distributed as shown in Fig.29(2), thereby enabling the correction by using the error correction code.

Namely, the interleave technology rearranges the transmission data at random, distributes error arising positions, and corrects this distributed error (the number of error bits is small) by using the error correction code.

However, there is a limit of error correction based on the error correction code. When the reception signal RX is buried in the noise N as shown in Fig.26(3), the error correction is impossible.

It is accordingly an object of the present invention to provide a method and an apparatus for a data transmission in transmission media in a variety of modes depending on noises from outside, connected apparatuses, a connection system such as multi-path, or the like, whereby a data transmission (1) in which processing load is light, (2) in which line equalization is easy and which is adaptable to the multi-path, or (3) which is resistant to a noise variation is realized.

Disclosure of Invention

(1) Hadamard multiplexing/distribution

In order to achieve the above-mentioned object, a method and an apparatus for a data transmission according to the present invention multiplex data to be transmitted by using a Hadamard (hereinafter, occasionally abbreviated as ADM) sequence. Also, a method and an apparatus for a data transmission according to the present invention distribute received data by using the Hadamard sequence.

It is to be noted that frame synchronization of multiplexing on a transmission side with distribution on a reception side may be performed by transmitting a frame synchronizing signal (e.g. an amplitude-modulated synchronizing signal) of multiplexed data on the transmission side, and by distributing the received data in synchronization with the frame synchronizing signal extracted on the reception side. This can be applied to a method and an apparatus for a data transmission according to the present invention described later.

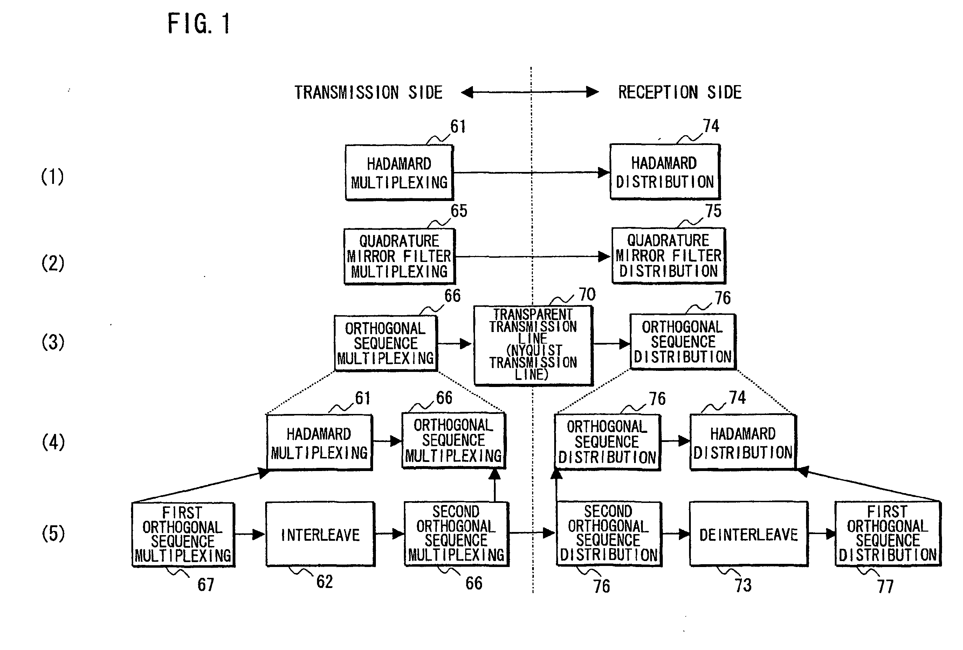

Fig.1 shows a principle of a method and an apparatus for a data transmission according to the present invention.

In Fig.1(1), a Hadamard multiplexer 61, on the transmission side, multiplexes data by using a Hadamard sequence. On the reception side, a Hadamard distributor 74 distributes the data by using the Hadamard sequence to be restored to the original data.

Hereinafter, a Hadamard transform and its inverse transform will be described referring to the following equations (1)-(6):

$$\begin{bmatrix} 1 & 1 \\ 1 & \text{-}1 \end{bmatrix} \qquad \cdots\cdots \text{Eq.(1)}$$

Multiplied in a vertical direction $\rightarrow$ 1  -1  =  0 $\leftarrow$ orthogonal relationship
and added

$$\begin{bmatrix} x+y \\ x-y \end{bmatrix} = \begin{bmatrix} 1 & 1 \\ 1 & \text{-}1 \end{bmatrix} \begin{bmatrix} x \\ y \end{bmatrix} \quad \cdots\cdots \text{Eq.(2)}$$

$$\begin{bmatrix} 2x \\ 2y \end{bmatrix} = \begin{bmatrix} 1 & 1 \\ 1 & \text{-}1 \end{bmatrix} \begin{bmatrix} x+y \\ x-y \end{bmatrix} \cdots\cdots \text{Eq.(3)}$$

$$\begin{bmatrix} 1 & 1 & 1 & 1 \\ 1 & \text{-}1 & 1 & \text{-}1 \\ 1 & 1 & \text{-}1 & \text{-}1 \\ 1 & \text{-}1 & \text{-}1 & 1 \end{bmatrix} \quad \cdots\cdots\text{Eq.(4)}$$

$$\begin{bmatrix} w+x+y+z \\ w\cdot x+y\cdot z \\ w+x\cdot y\cdot z \\ w\cdot x\cdot v+z \end{bmatrix} = \begin{bmatrix} 1 & 1 & 1 & 1 \\ 1 & \text{-}1 & 1 & \text{-}1 \\ 1 & 1 & \text{-}1 & \text{-}1 \\ 1 & \text{-}1 & \text{-}1 & 1 \end{bmatrix} \begin{bmatrix} w \\ x \\ y \\ z \end{bmatrix} \quad \cdots\cdots\text{Eq.(5)}$$

$$\begin{bmatrix} 4w \\ 4x \\ 4y \\ 4z \end{bmatrix} = \begin{bmatrix} 1 & 1 & 1 & 1 \\ 1 & \text{-}1 & 1 & \text{-}1 \\ 1 & 1 & \text{-}1 & \text{-}1 \\ 1 & \text{-}1 & \text{-}1 & 1 \end{bmatrix} \begin{bmatrix} w+x+y+z \\ w\cdot x+y\cdot z \\ w+x\cdot y\cdot z \\ w\cdot x\cdot v+z \end{bmatrix} \quad \cdots\cdots\text{Eq.(6)}$$

Eq.(1) shows a Hadamard matrix of the second order. If the elements of this matrix are multiplied in a vertical direction and the sum of them is obtained, it assumes "0". This indicates that the Hadamard matrix has an orthogonal relationship. It is to be noted that an inverse matrix of a Hadamard matrix assumes the same matrix as the original matrix.

Since the Hadamard matrix is an orthogonal matrix, it is possible to multiplex data by using the Hadamard transform and to restore the original data by distributing the multiplexed data with the Hadamard transform.

Eq.(2) shows output data ((x + y), (x-y)) when the Hadamard transform is performed to input data (x, y). Eq. (3) shows the case where the Hadamard inverse transform is performed to the output data to which the Hadamard transform is performed. The transform result assumes the original input data (x, y), if coefficients are neglected.

Eq.(4) shows a Hadamard matrix of the fourth order. Since the inverse matrix of this is the same as the original matrix, and the matrix in which rows and columns are exchanged with each other is the same as the original matrix, this matrix is an orthogonal matrix.

Eq.(5) shows output data in the case where the Hadamard transform is performed to input data (w, x, y, z). Eq.(6) shows data obtained by performing the Hadamard inverse transform to this output data. It is seen that the original data (w, x, y, z) is restored if coefficients are neglected.

Thus, since the calculation of the Hadamard transform/inverse transform is simple, the number of processing cycles is small compared with an IFFT or an FFT, and the load for a DSP (Digital Signal Processor) or the like generally used for processing apparatus is reduced.

Also, when the original data is restored by the inverse transform, noises carried on the data after the Hadamard transform are reduced compared to noises carried on the data directly transmitted without the Hadamard transform/ inverse transform. This can be seen from the fact that e.g. data "w" in Eq.(6) for the inverse transform is obtained by averaging input signals (w + x + y + z), (w-x + y-z), (w + x-y-z), and (w-x-y + z) respectively including noises.

Namely, it is seen that the Hadamard transform/inverse transform has an integration (averaging) effect in the same way as the other orthogonal transform, and is resistant to a noise variation.


(2) Quadrature mirror filter multiplexing/distribution

In the same way as multiplexing and distribution using the Hadamard sequence, as shown in Fig.1(2), it becomes possible to reduce the load of averaging and the processing cycle number by multiplexing and distribution using a quadrature (orthogonal) mirror filter sequence. As for the processing cycle number, the effect is especially large in a quadrature mirror filter sequence of lower-order.

(3) Orthogonal sequence multiplexing + transparent transmission line, Transparent transmission line + orthogonal sequence distribution

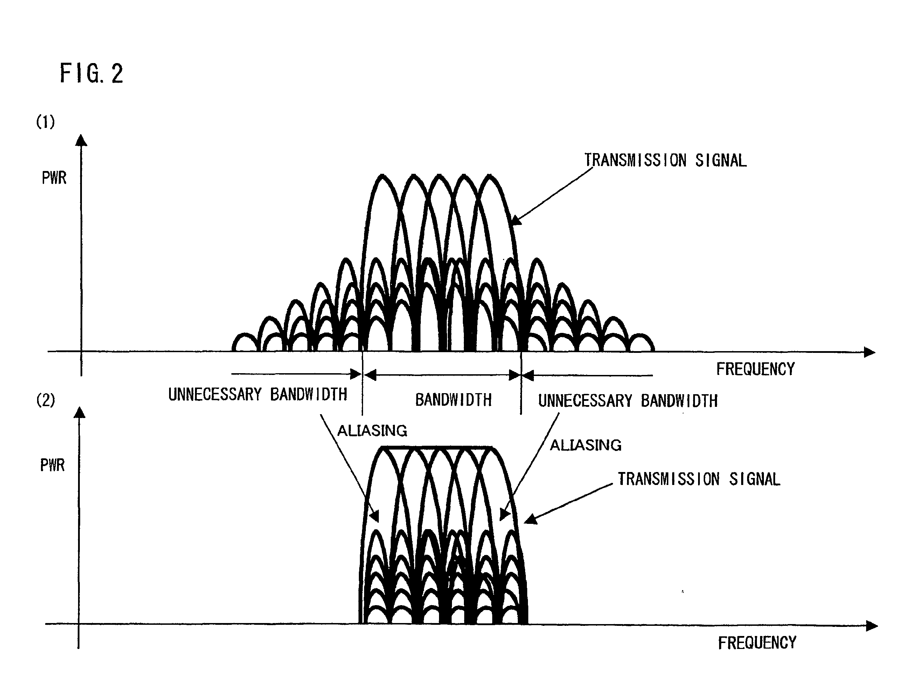

As mentioned above, although unnecessary bandwidths of a single channel become orthogonal at carrier points of regular intervals in the DMT system and the OFDM system, as shown in Fig.2(1), the unnecessary bandwidths extend to both of low and high frequency bands in an attenuating waveform with a sinx/x curve. A transmission line construction in a narrow bandwidth such as a Nyquist transmission line of the QAM is difficult.

In order to solve this issue, the method and the apparatus for the data transmission according to the present invention may multiplex data by using an orthogonal sequence; transmit the multiplexed data to a transparent transmission line; receive data from a transparent transmission line; and distribute the data by using an orthogonal sequence.

Namely, as shown in Fig.1(3), data is multiplexed on the transmission side by using an orthogonal sequence (e.g. Hadamard sequence) to be transmitted to a transparent transmission line 70. On the reception side, the (multiplexed) data received from the transparent transmission line 70 is distributed by using the orthogonal sequence (e.g. Hadamard sequence) to be restored to the original data.

Thus, as shown in Fig.2(2), by passing a transmission signal through the transparent transmission line which has almost the same bandwidth as that of the Nyquist transmission line 70 and outputs the inputted signal unchanged, the unnecessary bandwidths are aliased within the bandwidth so as to be removed. In this case, the aliased signals cause no intersymbol interference since they are orthogonal to each other.

It is to be noted that as the orthogonal sequence, a Wavelet transform, a quadrature mirror filter, a DMT system, an OFDM system, or the like may be used in addition to the Hadamard transform.

Also, as the transparent transmission line, a QAM transmission line, a spread spectrum transmission line, or the like may be used.

(4) Hadamard multiplexing + orthogonal sequence multiplexing + transparent transmission line

Transparent transmission line + orthogonal sequence distribution + Hadamard distribution

Also, the method and the apparatus for the data transmission according to the present invention may multiplex data by using a Hadamard sequence, further multiplex the multiplexed data by using an orthogonal sequence, and transmit this multiplexed data to a transparent transmission line. Also, the method and the apparatus for the data transmission according to the present invention may distribute data received from the transparent transmission line by using an orthogonal sequence, and further distribute the distributed data by using a Hadamard sequence.

Namely, as shown in Fig.1(4), after Hadamard multiplexing 61 is performed to data by using the Hadamard sequence on the transmission side, orthogonal sequence multiplexing 66 is performed, so that the multiplexed data is transmitted to the Nyquist transmission line 70.

On the reception side, after distributing the (multiplexed) data received from the Nyquist transmission line 70 by using orthogonal sequence distribution 76, the data is further distributed by using the Hadamard sequence to be restored to the original data.

Thus, it becomes possible to remove unnecessary bandwidths without generating intersymbol interference, and to enhance the processing speed by using the Hadamard transform.

(5) First orthogonal sequence multiplexing + interleave + second orthogonal sequence multiplexing

Second orthogonal sequence distribution + deinterleave + first orthogonal sequence distribution

Also, in order to solve the above-mentioned noise variation issue, on the transmission side, the method and the apparatus for the data transmission according to the present invention may multiplex data by using a first orthogonal sequence; interleave the multiplexed data on a frequency (domain) axis and a time (domain) axis; and multiplex the interleaved multiplexed data by using a second orthogonal sequence. Also, on the reception side, the method and the apparatus for the data transmission according to the present invention may distribute data by using the second orthogonal sequence; deinterleave the distributed data on a frequency axis and a time axis; and distribute the deinterleaved data by using the first orthogonal sequence.

Thus, as shown in Fig.1(5), on the transmission side, averaging is performed by multiplexing 67 using the first orthogonal sequence and by interleave 62 using a frequency axis interleave and a time axis interleave, and equalization is performed by multiplexing 66 using the second orthogonal sequence. Thus, by separating the average processing from the equalization processing, the processing is made simple, and it becomes possible to perform both of average and equalization processing.

On the reception side, after performing the equalization processing by multiplexing 76 with the second orthogonal sequence, the average processing is performed by deinterleave 73 with the time axis deinterleave and the frequency axis deinterleave, and by distribution 77 with the first orthogonal sequence.

At this time, it is possible to shorten the processing time by using the Hadamard sequence as the first orthogonal sequence. Also, a PN sequence may be used for the interleave and the deinterleave.

Thus, compared with the prior art interleaver which performs a bit interleave at a preceding stage of e.g. the DMT system (orthogonal sequence), interleave can be performed at a high speed, thereby enabling noises to be more averaged.

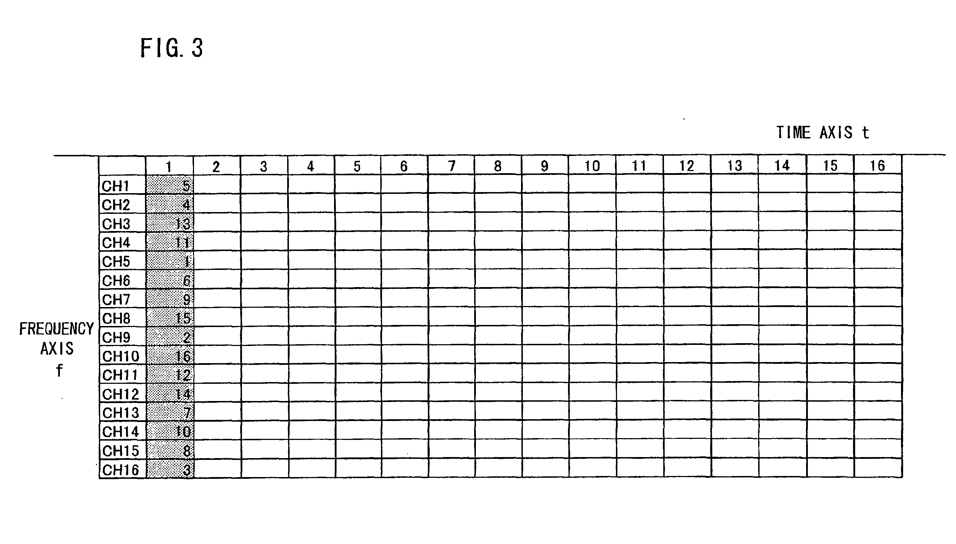

Fig.3 shows a state where an interleaver is provided and channels CH1-CH16 are spread only along a frequency axis "f" after multiplexing data with e.g. the Hadamard transform (see hatched portion).

This spread is performed by using a PN sequence (1, 1, 1, 1, 0, 1, 0, 1, 1, 0, 0, 1, 0, 0, 0), and data of each channel CH1-CH16 is spread to a channel CH of a value determined by e.g. 4 bits sequentially taken out of the PN sequence.

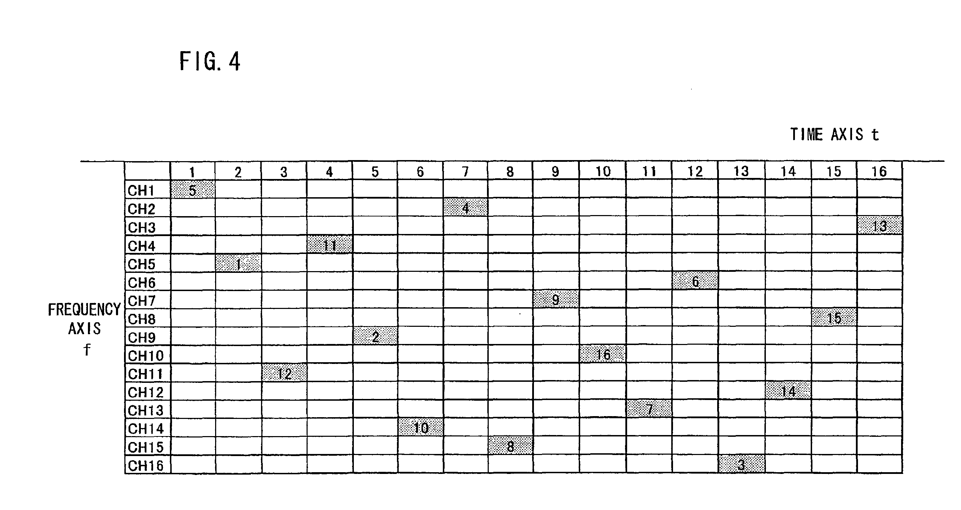

Fig.4 shows a state where the interleaver provided on the transmission side spreads data along a time axis "t" in addition to the spread of the frequency axis "f" shown in Fig.3. In the same way as the spread along the frequency axis "f", the spread along the time axis "t" is performed by using the PN sequence, and data at each time of t1-t16 is spread to a time "t" of a value determined by 4 bits sequentially taken out of the PN sequence.

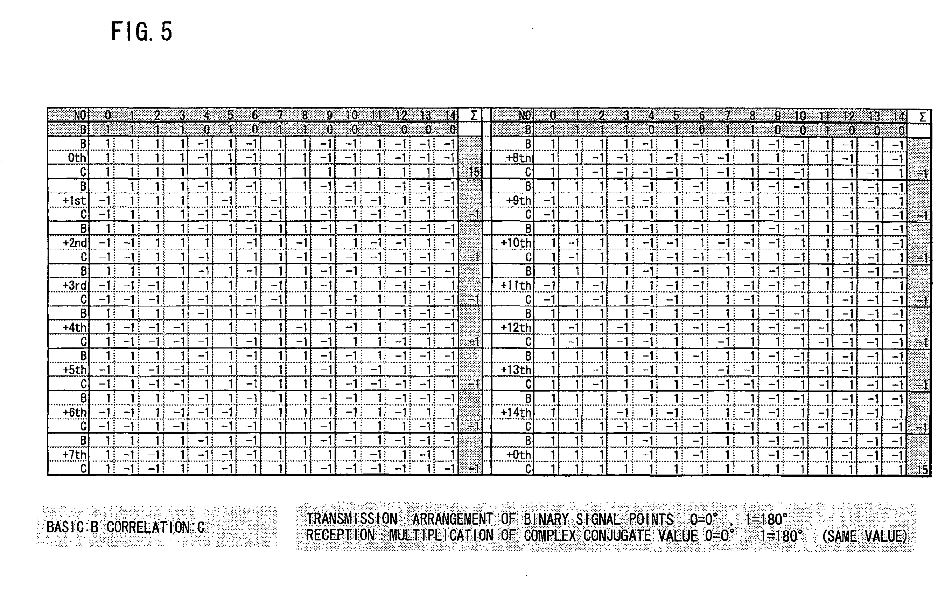

Fig.5 shows a diagram in which a correlation of the PN sequence (2 values, 15 chips) is obtained, and shows an orthogonality of the PN sequence. Firstly, supposing that the arrangement of signal points on the transmission side of the PN sequence has $0=0°$ and $1=180°$, it is effected that $0 \rightarrow -1$ and $1 \rightarrow 1$. Therefore, the reference PN sequence (see hatched portion) is transformed into a basic sequence (1, 1, 1, 1, -1, 1, -1, 1, 1, -1, -1, 1, -1, -1, -1) obtained by changing the value "0" in the reference PN sequence to "-1".

Furthermore, if a scalar product (product sum of elements in a sequence) between this basic sequence and this basic sequence itself is obtained, 0th correlation = "15". Then, if the scalar product between the basic sequence and the 1st sequence obtained by rotating each element of the basic sequence by a single element is obtained, +1st correlation = "-1".

Similarly, if the scalar products between the basic sequence and +2nd-+14th sequences rotated by 2-14 elements are respectively obtained, all of +2nd-+14th correlations assume "-1". Since the basic sequence is restored by the rotation of 15 times, +15th correlation assumes "15" the same as the 0th correlation. Thus, the orthogonality of the PN sequence, namely, 0th -+14th sequences are mutually orthogonal without correlations being recognized.

It is to be noted that when a complex number signal is received on the reception side, and the scalar product of the complex numbers, i.e. the sum of the product with complex conjugate values, is obtained, the same values as the transmitted $0=0°$ and $1=180°$ are obtained.

By using such a simple PN sequence for the interleaver, the calculation time is shortened compared with the case where other orthogonal sequences are used, thereby enabling a high-speed data transmission.

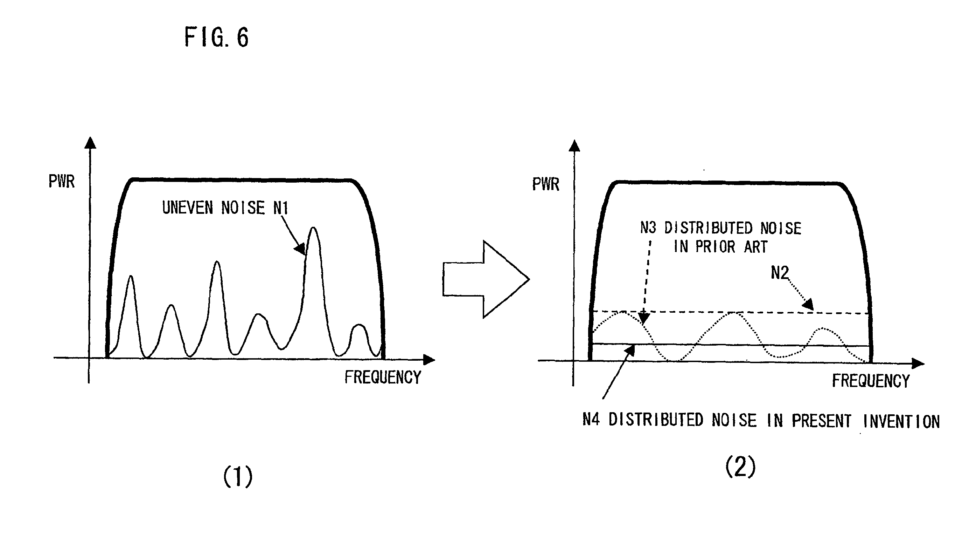

Fig.6 shows averaging of noise by an interleaver of the present invention, which are the same as the above-mentioned Fig.29. The prior art distributed noise N2 shown in Fig.29(2) actually looks like the prior art distributed noise N3 in Fig.6(2).

According to the high-speed interleaver of the present invention, it becomes possible to perform averaging like a noise N4 distributed by the present invention of Fig.6(2), and to make corrections with error correction codes.

### (6) Noise canceler

As having been shown in Fig.26, in case of a power-line transmission line, a reception signal RX is buried in a noise N. In such a case, even if averaging by the above-noted interleave is performed, it is impossible to take out the reception signal RX from the noise N.

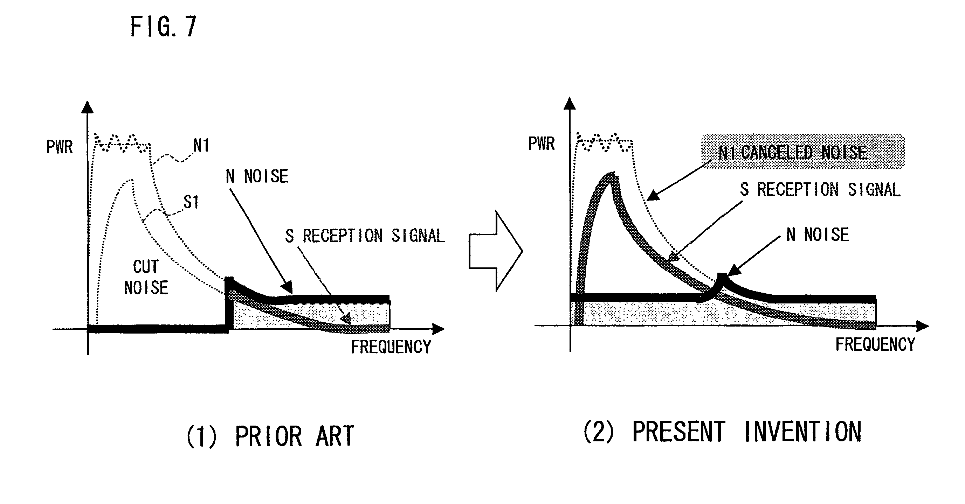

For example, even though a low frequency band (noise component N1, signal component S1) where the level of a noise N is high, as shown in Fig.7(1), is cut to transmit data only by using a high frequency band, the S/N value remains minus.

On the other hand, if a noise in a power line is carefully observed in Fig.26(3) and Fig.7(1), it is seen that there are a number of noises emphasized in a low frequency band, in which if being microscopically observed they are white noises while if being macroscopically observed (from the entire frequency bandwidth), they are colored noises. Namely, if being observed at any narrow bandwidth over the entire frequency band, they are the same white noises.

Accordingly, in the present invention, the colored noise observed macroscopically in that way is noticed, and as shown in Fig.7(2), the noise component N1 dominant in the low frequency band is positively canceled to shift the S/N value to plus, so that the extraction of a reception signal S buried in the low frequency band, with a comparatively high level, is attempted.

Therefore, the prevent invention realizes a method and an apparatus for a data transmission for multiplexing data by using an orthogonal sequence on the transmission side and for periodically inserting zero-points into this multiplexed data, for interpolating a noise component of the data by using the zero-points periodically included in the received data on the reception side, for regenerating the original data transmitted by subtracting the noise components from the data, and for distributing the original data regenerated by using the orthogonal sequence.

It is to be noted that the zero-points may be a signal (hereinafter, occasionally referred to as specific signal) in which a time, an amplitude, and a phase are specified.

Hereinafter, a principle of such a method and an apparatus for noise canceling according to the present invention will be described referring to the figures.

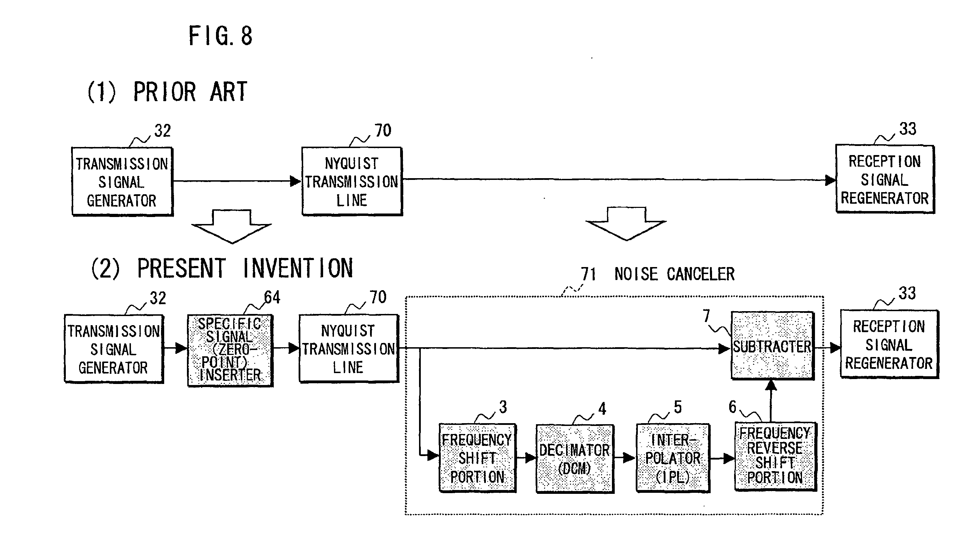

Fig.8(1) shows a prior art data transmission system (hereinafter, referred to as transmission/reception system) of a signal, in which a transmission signal from a transmission signal generator 32 multiplexing transmission data by using an orthogonal sequence is sent to a reception signal regenerator 33 distributing reception data by using the orthogonal sequence through a Nyquist transmission line 70 as a transparent transmission line.

In the present invention, as shown in Fig.8(2), an inserter (inserting portion) 64 of a specific signal or a zero-point (hereinafter, generally referred to as zero-point) is provided between the transmission signal generator 32 and the Nyquist transmission line 70 in such a transmission/reception system, and a noise canceler 71 is provided between the Nyquist transmission line 70 and the reception signal regenerator 33. It is to be noted that the noise canceler 71 is composed of a frequency shift portion 3, a decimator (DCM) (decimating portion) 4, an interpolator (IPL) (interpolating portion) 5, a frequency reverse shift portion 6, and a subtracter (subtracting portion) 7, as described later.

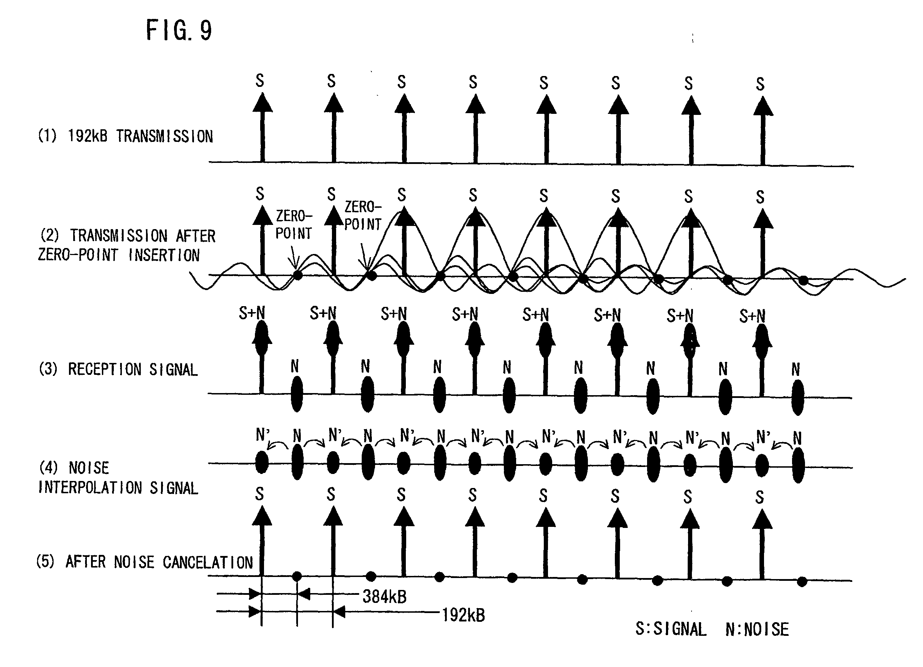

First of all, the symbol rate of the transmission signal generated by the transmission signal generator 32 is assumed to be e.g. 192 kB as shown in Fig.9(1). If such a transmission signal is provided to the zero-point inserter 64, the zero-point inserter 64 inserts the zero-point, as shown in Fig.9(2), into the transmission signal of Fig.9(1) to be transmitted to the Nyquist transmission line 70. If the signal S is also transmitted at the same rate, the transmission rate assumes 384 kB.

The reception side, as shown in Fig.9(3), receives the reception signal S and the zero-point on which the noise N of the transmission line 70 is respectively put.

The noise canceler 71 cancels the signal S including the noise N (S+N), and leaves only the noise N at the zero-point. Then, as shown in Fig.9(4), a noise interpolation signal N' is generated at each reception signal point from the noises N on both sides.

The noise canceler 71 further subtracts the noise interpolation signal N' shown in Fig.9(4) from the reception signal shown in Fig.9(3), so that the noise N assumes N-N' as shown in Fig.9(5). Thus, the signal (corresponding to the transmission signal), having substantially removed therefrom the noise, only composed of the signal component S can be regenerated.

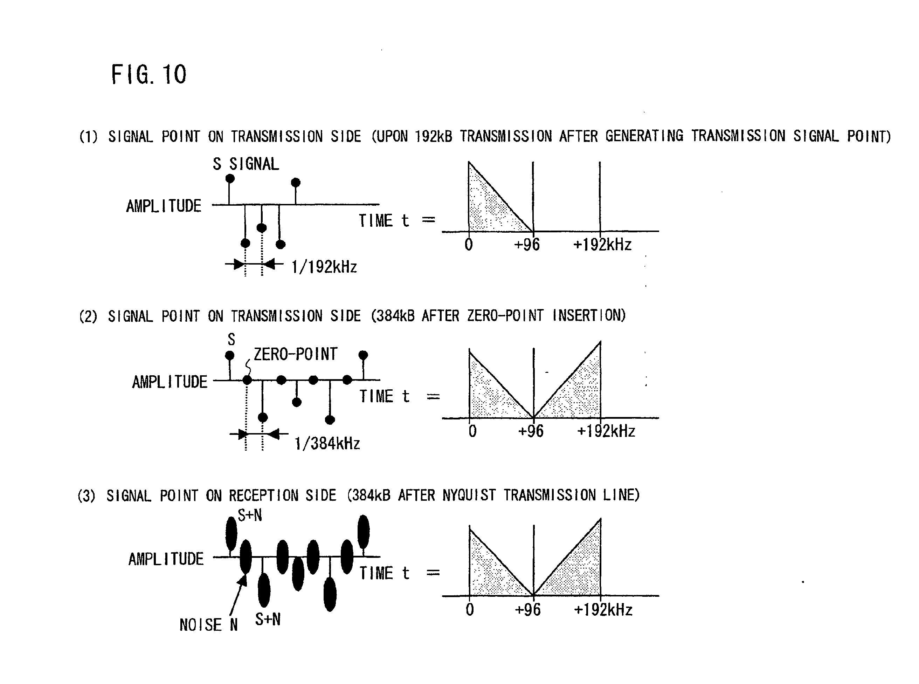

The operation of the noise canceler 71 will now be described in more detail referring to Figs.10-12.

The above-mentioned transmission signal is firstly transmitted at the rate of 192 kB as shown in Fig.10(1). The spectrum in this case is shown by the scalar, in which the abscissa denotes frequency bandwidth kHz, in the right of Fig.10(1).

When the zero-points are inserted into such a transmission signal, the zero-points are to be inserted into signal points as shown in Fig.10(2), so that the frequency bandwidth after the insertion assumes 384 kB. In this case, a spectrum is copied around +192 kHz can be obtained.

The reception signal at the time when such a transmission signal into which the zero-points are inserted is transmitted to the reception side assumes the noise components N being overlapped with the signals S and the zero-points respectively, as shown in Fig.10(3). The spectrum in this case is the same as that of the transmission signal shown in Fig.10(2).

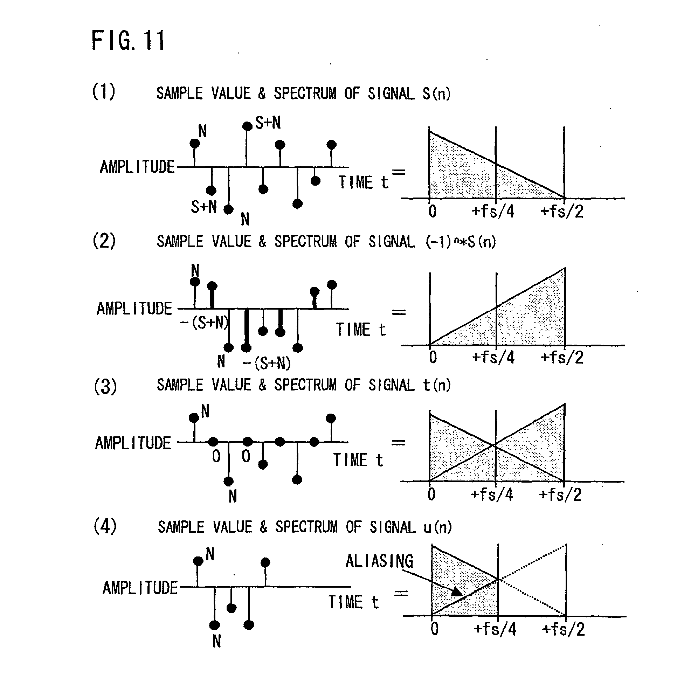

The operation at the time when the reception signal is sent to the decimator 4 after being shifted by the frequency shift portion 3 in the noise canceler 71 is shown in Fig.11.

Namely, a sample value and a spectrum of a reception signal S(n) are as shown in Fig.11(1), and the Z transformation A of the signal S(n) is expressed by the following equation:

$$A=S(z)=\Sigma S(n)z^{-n} \qquad\qquad Eq.(1)$$

It is to be noted that the spectrum in the right of Fig.11(1) shows that the noises are distributed over $0-f_s/2$ ($f_s$ is sample frequency) since the noises are added by the transmission line 31.

The Z transformation B of the inversion signal of the reception signal S(n) is expressed by the following equation:

$$B=Z[(-1)^n S(n)]=S(-z) \qquad\qquad Eq.(2)$$

The inverted signal in this case has a coefficient $(-1)^n$ because the inversion is made only to the signal component at the signal point.

The Z transformation C of a signal t(n) obtained after adding the inversion signal $(-1)^n*S(n)$ to the reception signal S(n) shown in Fig.11(1) is given by the following equation:

$$C=Z[t(n)]=T(z)=(1/2)*[S(z)+S(-z)] \qquad\qquad \text{Eq.(3)}$$

Namely, the amplitude at the signal point becomes zero, so that not only the signal component S but also the noise component N overlapped with the signal S is removed. The signal t(n) in which t(1), t(3),,,= 0 is expressed by the following equation:

$$T(z)=\Sigma t(2n)*Z^{-2n} \qquad\qquad \text{Eq.(4)}$$

A signal D after the signal point of the signal t(n) obtained in this way shown in Fig.11(3) is decimated is expressed by the following equation:

$$D=u(n)=T(z^{1/2}) \qquad\qquad \text{Eq.(5)}$$

Since the transmission rate falls to 192 kB in this case, the spectrum is aliased or folded as shown in Fig.11(4).

A final signal E=U(z) is given by the following equation:

$$E=[S(z^{1/2})+S(-z^{1/2})]/2 \qquad\qquad \text{(Eq.(6)}$$

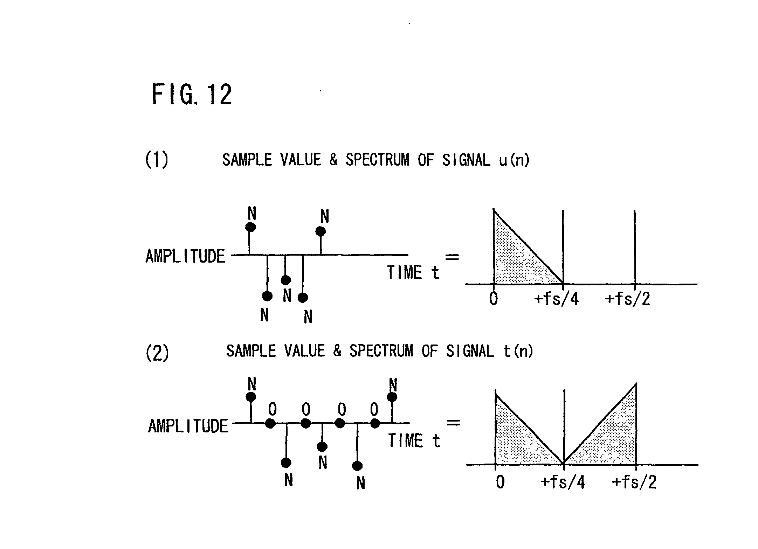

The thus obtained decimation signal u(n) provided to the interpolator 5 shown in Fig.8 would exhibit the operations shown in Fig.12.

Namely, the signal u(n) from the decimator 4 is only composed of the noise component having the sample value and the spectrum shown in Fig.12(1). The signal t(n) with the zero-point inserted into the noise component has a sample value and a spectrum such as shown in Fig.12(2), and the Z transformation A is expressed by the following equation:

$$A=(z)=\Sigma t(n)z^{-n} \qquad\qquad \text{Eq.(7)}$$

Since t(1), t(3),,,=0,

$$A=\Sigma t(2n)z^{-n}=u(n)z^{-2n} \qquad\qquad \text{Eq.(8)}$$

Then, the following equation is obtained:

$$T(z)=U(z^2) \qquad\qquad \text{Eq.(9)}$$

If the zero-points are interpolated with the noise components N on their both sides in the signal T(z), the signal has the same transmission rate as the reception signal S(n) shown in Fig.11(1) and has only the noise component.

Accordingly, by subtracting the interpolated signal from the reception signal S(n), the transmission signal into which the zero-points are inserted shown in Fig.10(2) can be obtained.

It is to be noted that in order to obtain the transmission signal shown in Fig.10(1) the zero-points only have to be decimated.

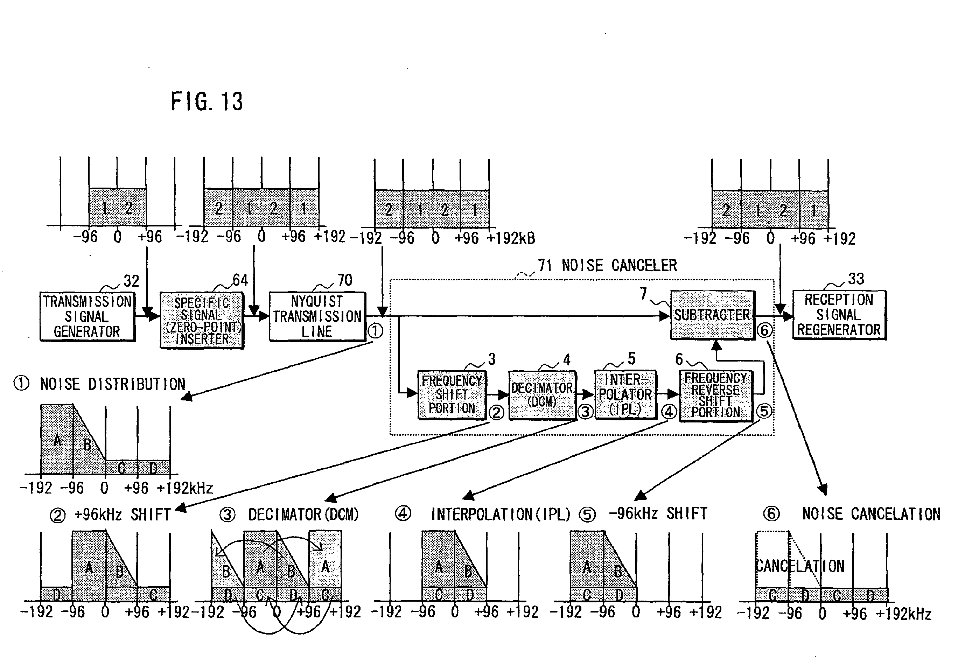

While in the above description, how the transmission signal is regenerated on the reception side has been mentioned, Fig.13 shows how the noise component is canceled by paying attention only to the noise component.

Namely, when the transmission signal has the transmission bandwidth of 192 kB ($\pm$96 kB), and the zero-points are inserted thereto, the bandwidth is doubled, so that the copied component is generated to be sent to the Nyquist transmission line 70.

At the noise canceler 71, as shown in a noise distribution characteristic ① , the noise distribution firstly extends over ±192 kHz. The noise level is high especially in the left half of the frequency bandwidth of -192-0 kHz as shown in Fig.7, and is low in the frequency bandwidth of 0-+192 kHz.

When the frequency shift portion 3 shifts the frequency by +96 kHz in this state, a noise component A+B will be shifted by +96 kHz for the noise characteristic ① , as shown in a noise characteristic ② . With this shifting, a noise component D in the noise characteristic ① will be aliased to -192 kHz⁻-96 kHz. Thus, the noise bandwidth for which the interpolation (interpolated prediction) is desired to be performed is shifted to the interpolation bandwidth, thereby more effectively canceling the noise.

It is to be noted that the shift amount of +96 kHz is only one example for convenience sake of description.

If the decimation operation is performed by the decimator 4 in this state, the frequency becomes half. Therefore, the noise component A is aliased in +96-+192 kHz, the noise component B is aliased to -192⁻-96 kHz, the noise component C is aliased to -96-0 kHz, and the noise component D is aliased to 0⁻+96 kHz. The bandwidth where the aliased component becomes the least is selected here.

If the interpolator 5 interpolates the zero-points and performs a filter canceling of the noise components A+C and B+D on both sides, the noise components A+C and B+D only between -96-+96 kHz remain as shown in a noise characteristic ④ .

If the interpolated noise components are shifted in the reverse direction to the above-mentioned frequency shift, that is, by -96 kHz, the noise components A+C and B+D only between -192-0 kHz remain as shown in a noise characteristic ⑤ .

Accordingly, the subtracter 7 subtracts such noise components from the entire noise components shown in the characteristic ① thereby completely canceling the noise components A and B between -192-0 kHz as shown in a characteristic ⑥ . It is to be noted that although the noise components C and D remain, their noise level is low, as shown in Fig.7(2), so that the S/N value is not greatly influenced.

The reception signal from which the noise is canceled in that way is regenerated substantially corresponding to the transmission signal.

It is to be noted that the reason for performing the frequency shift as mentioned above is because the interpolation bandwidth is set e.g. to the bandwidth where the most noises exist (in low frequency band in this example) to select the high frequency band with less noise for the aliased frequency bandwidth.

While in the above-mentioned Figs.9 and 10, a case where one zero-point is inserted between the signal points has been mentioned, Fig.14 show various patterns of the zero-point insertion.

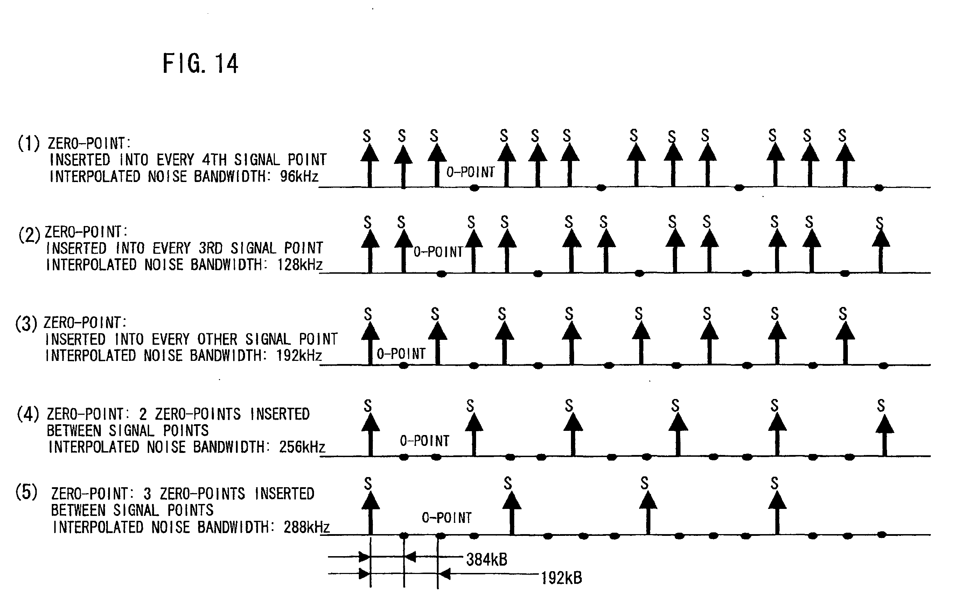

Namely, Fig.14(1) shows the case where the zero-points are inserted into every 4th signal S, whereby the interpolated noise bandwidth assumes 96 kHz.

Also, Fig.14(2) shows a case where the zero-points are inserted into every 3rd signal S, whereby the interpolated noise bandwidth assumes 128 kHz.

Fig.14(3) shows a case where the zero-points are inserted into every other signal in the same way as the above-mentioned example, whereby the interpolated noise bandwidth assumes 192 kHz.

Fig.14(4) shows an example in which two zero-points are inserted between the signals S, whereby the interpolated noise bandwidth assumes 256 kHz.

Furthermore, Fig.14(5) shows an example in which three zero-points are inserted between signals S, whereby the interpolated noise bandwidth assumes 288 kHz.

By increasing the number of the zero-point as shown in Figs.14(4) and 14(5), the noise canceling over a wider bandwidth is made possible. Although the data transmission rate may decrease in some cases in exchange for the increase of the noise proof, it becomes possible to withstand worse circumstances.

Brief Description of Drawings

Fig.1 is a block diagram showing a principle of a method and an apparatus for a data transmission according to the present invention;

Fig.2 is a diagram showing a basic principle of a removal of an unnecessary bandwidth in the present invention;

Fig.3 is a diagram showing an example of a time axis interleave in the present invention;

Fig.4 is a diagram showing an example of a time axis/frequency axis interleave in the present invention;

Fig.5 is a diagram showing an orthogonality of a PN sequence used in the present invention;

Fig.6 is a graph showing a basic principle of noise averaging in a method and an apparatus for a data transmission according to the present invention;

Fig.7 is a graph showing a noise cancelation in a method and an apparatus for a data transmission according to the present invention;

Fig.8 is a block diagram for comparing a basic arrangement of a noise canceler in the present invention with that in the prior art;

Fig.9 is a diagram showing a schematic operation of the present invention;

Fig.10 is a diagram showing in detail a transmitting operation of the present invention;

Fig.11 is a diagram illustrating a decimating operation of the present invention;

Fig.12 is a diagram illustrating an interpolating operation of the present invention;

Fig.13 is a diagram showing a canceling process of a noise component of the present invention;

Fig.14 is a diagram showing various states of zero-point insertion by the present invention;

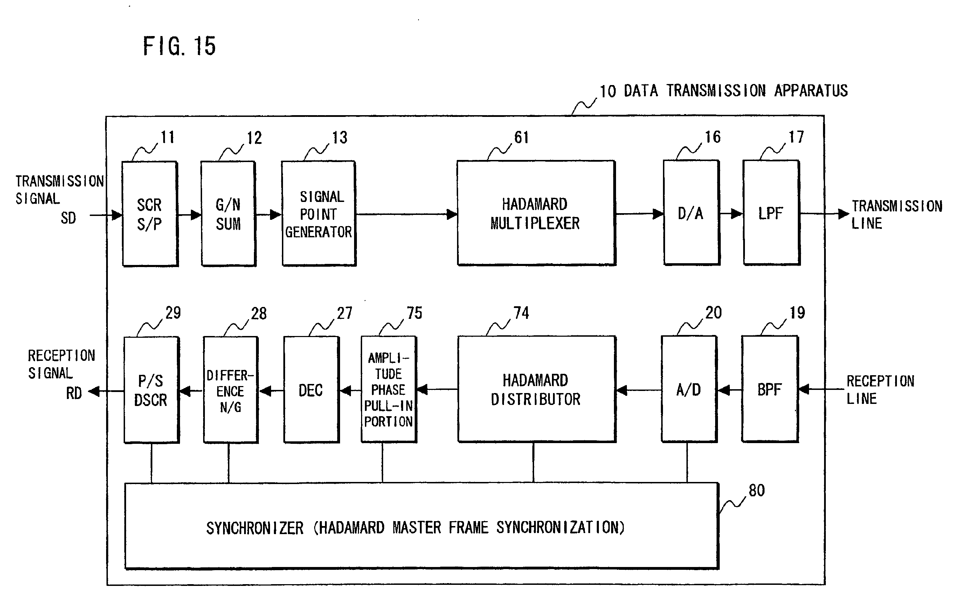

Fig.15 is a block diagram showing an embodiment (1) of a method and an apparatus for a data transmission according to the present invention;

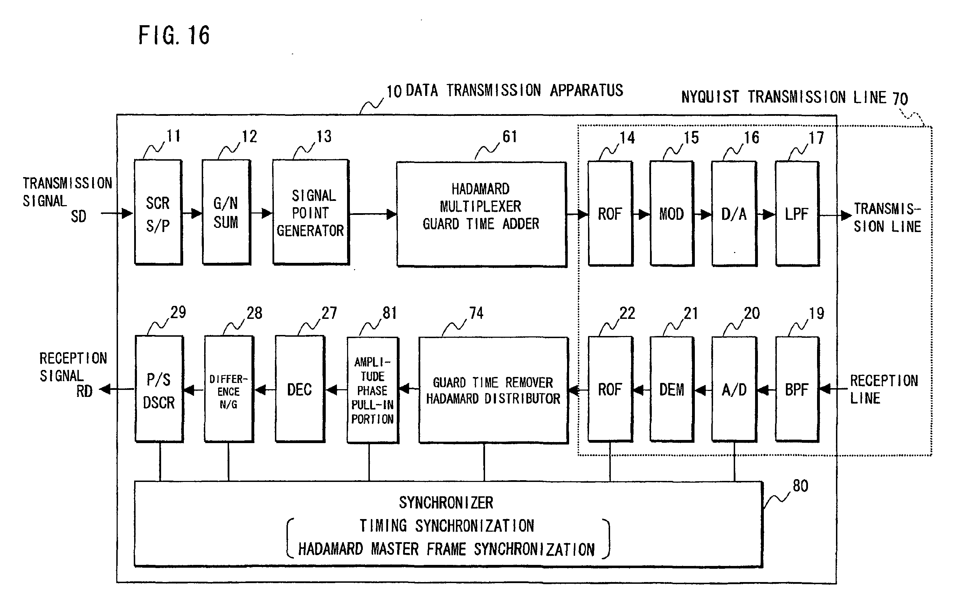

Fig.16 is a block diagram showing an embodiment (2) of a method and an apparatus for a data transmission according to the present invention;

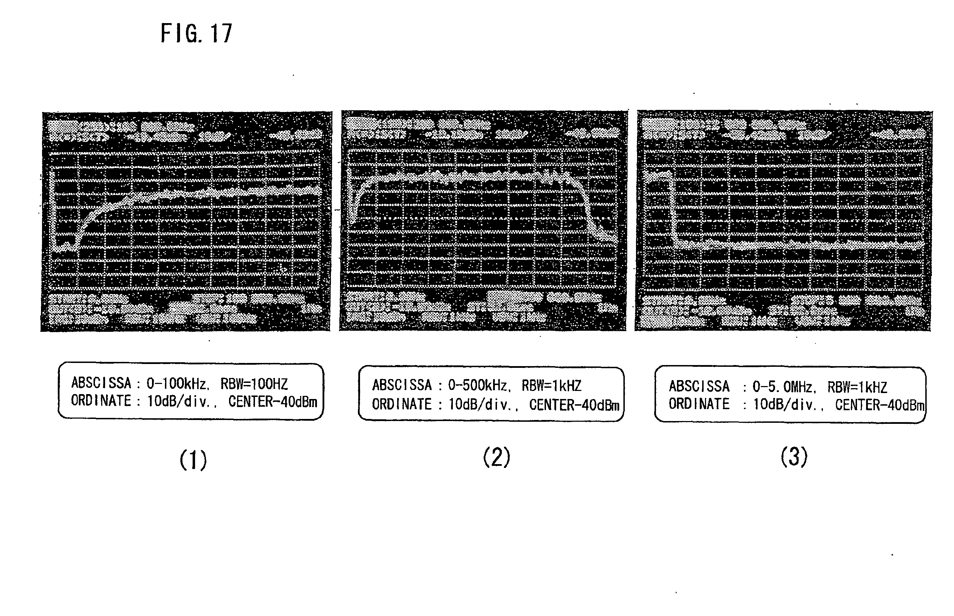

Fig.17 is a diagram showing an experimental example of an unnecessary bandwidth removal in a method and an apparatus for a data transmission according to the present invention;

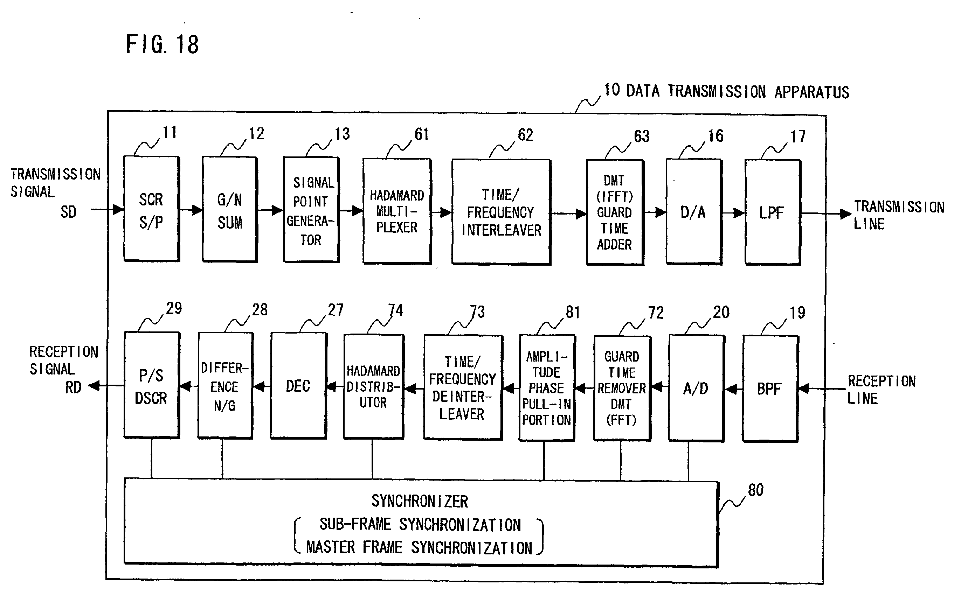

Fig.18 is a block diagram showing an embodiment (3) of a method and an apparatus for a data transmission according to the present invention;

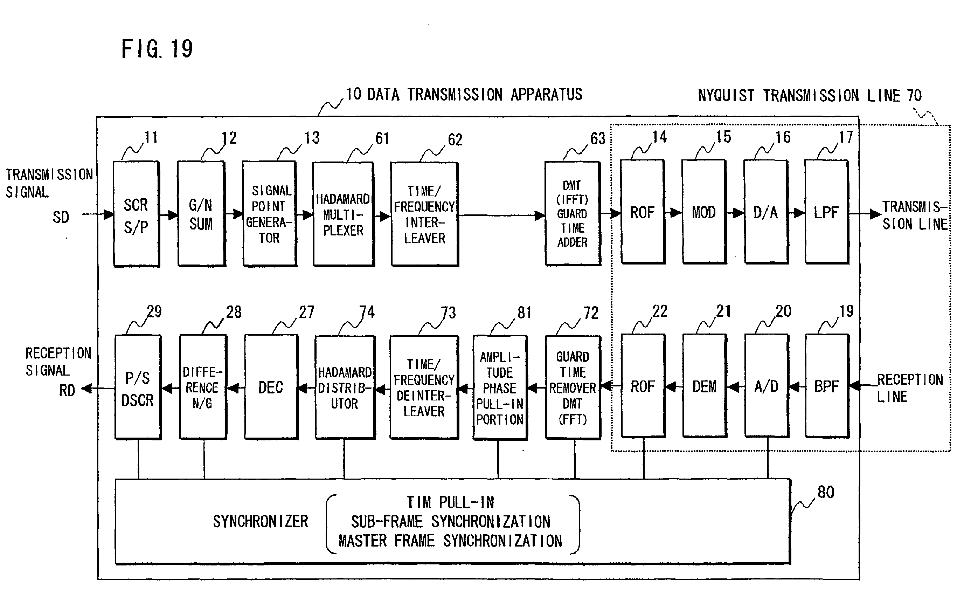

Fig.19 is a block diagram showing an embodiment (4) of a method and an apparatus for a data transmission according to the present invention;

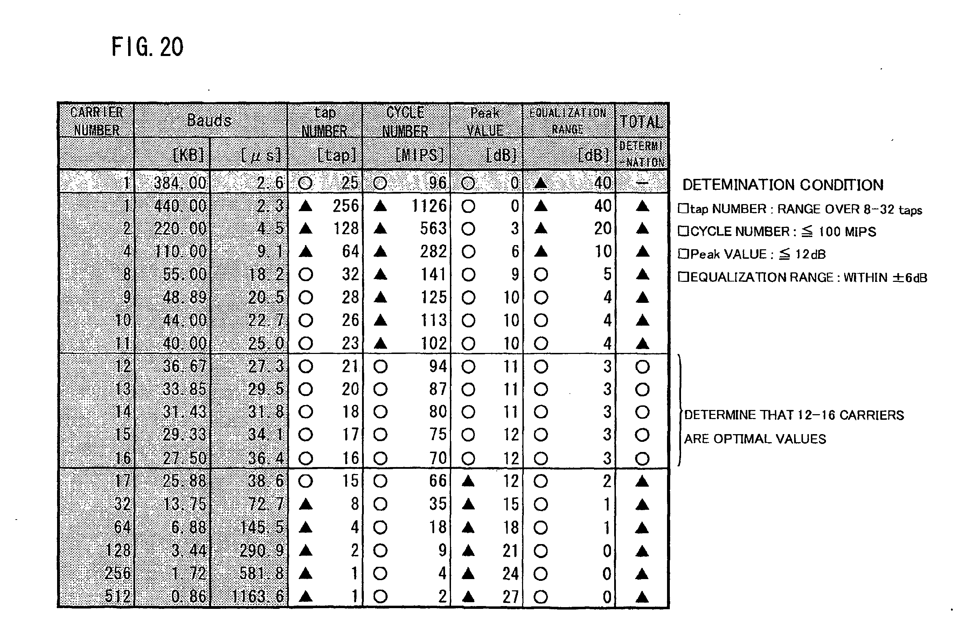

Fig.20 is a table showing an optimization of a carrier number in the present invention;

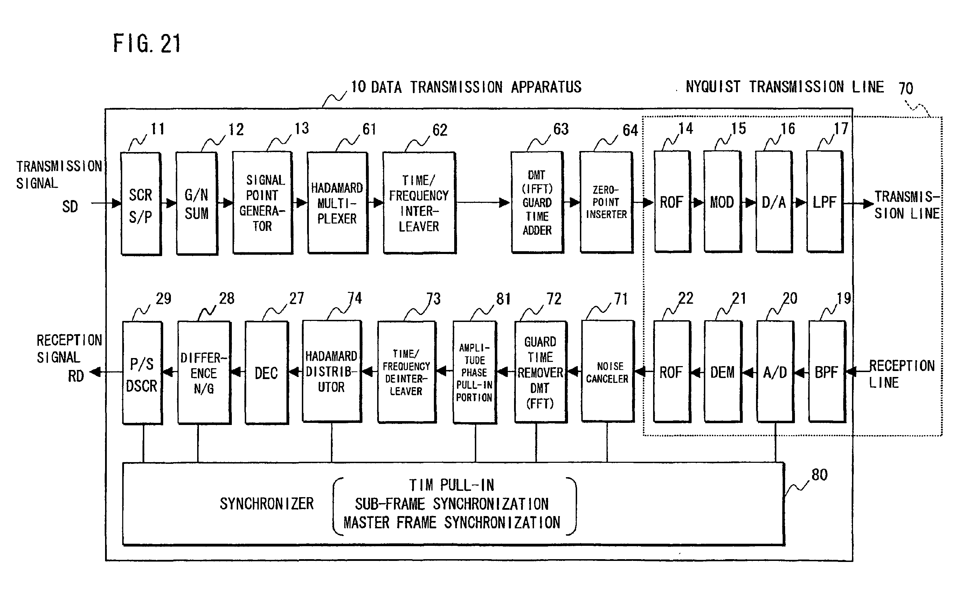

Fig.21 is a block diagram showing an embodiment (5) of a method and an apparatus for a data transmission according to the present invention;

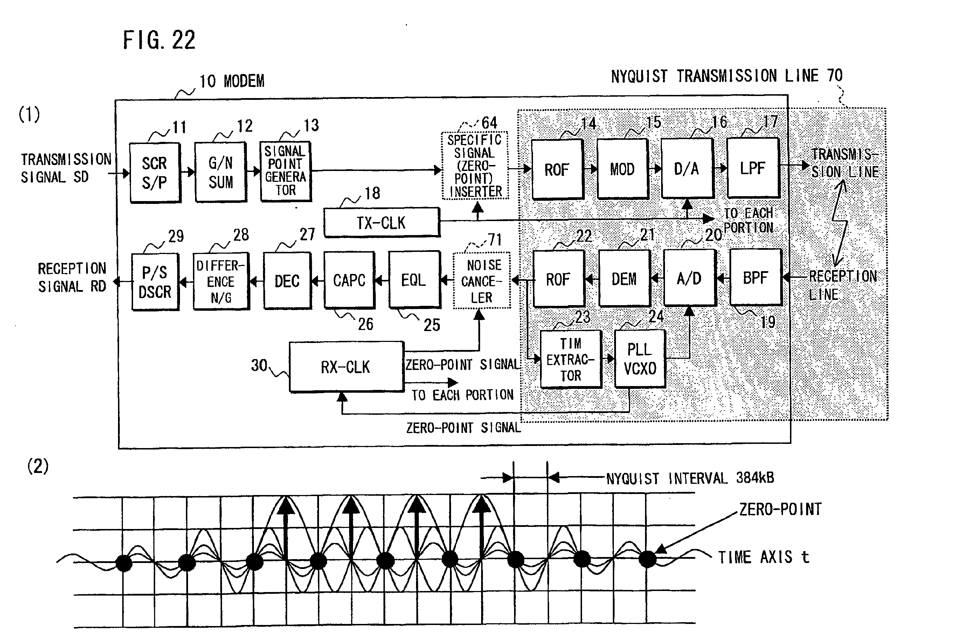

Fig.22 is a block diagram showing an embodiment (6) of a method and an apparatus for a data transmission according to the present invention;

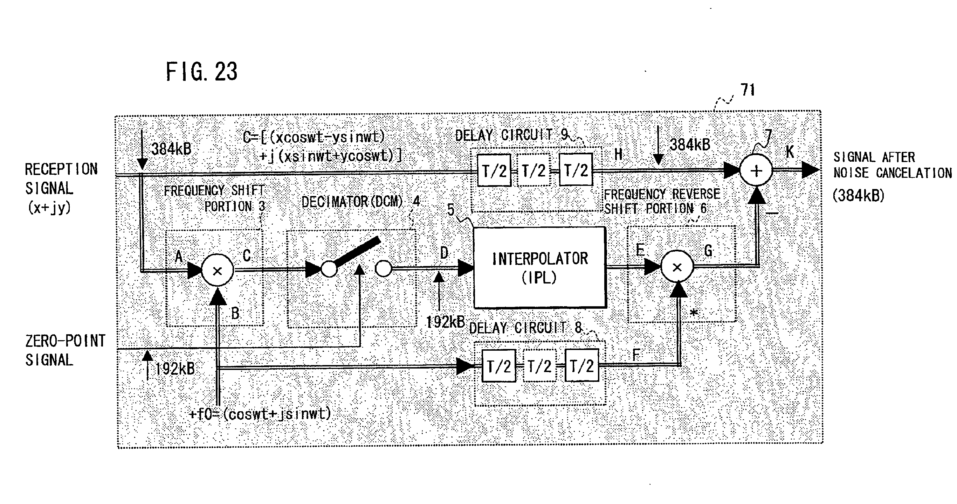

Fig.23 is a block diagram showing an embodiment of a noise canceler used in the present invention;

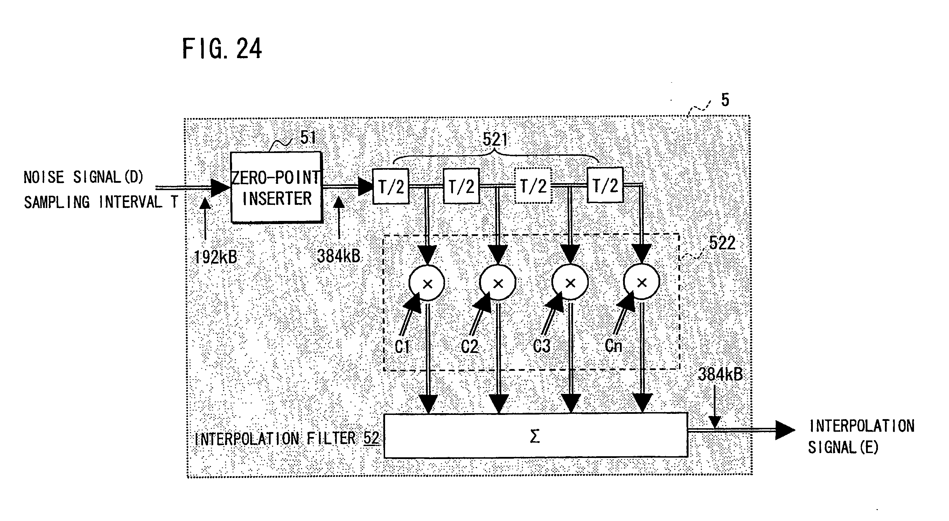

Fig.24 is a block diagram showing an embodiment of an interpolator used in the present invention;

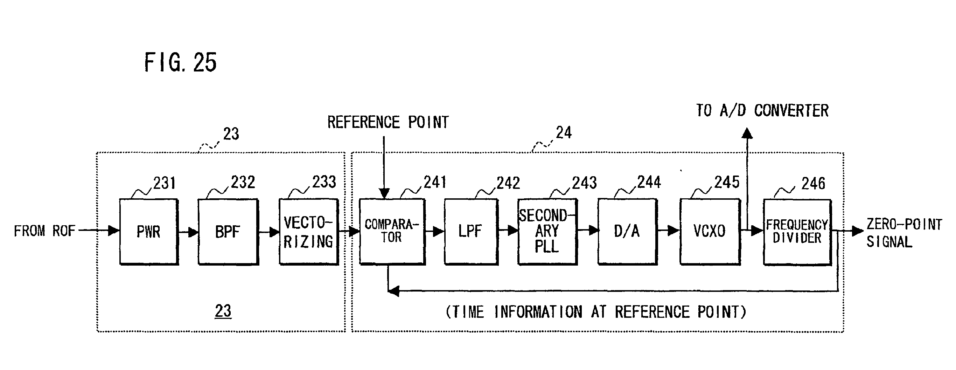

Fig.25 is a block diagram showing an embodiment of a timing extractor and a PLL circuit used in the present invention;

Fig.26 is a diagram showing an issue (1) in the prior art method and apparatus for a data transmission;

Fig.27 is a block diagrams showing an arrangement of a modem which is the prior art data transmission apparatus;

Fig.28 is a diagram showing an issue (2) in the prior art method and apparatus for a data transmission; and

Fig.29 is a diagram showing an issue (3) in the prior art method and apparatus for a data transmission.

Description of Reference Numerals

3 frequency shift portion   4, 44,45 decimator (DCM)

5 interpolator (IPL)   6 frequency reverse shift portion

7 subtracter   8, 9 delay circuit

10 data transmission apparatus, modem,

11 scrambler-S/P converter (SCR-S/P)

12 G/N converter-sum calculator (G/N-SUM)

13 signal point generator   14, 22 roll-off filter (ROF)

15 modulation circuit (MOD)   16 D/A converter

17 low-pass filter (LPF)

18 transmission clock generation circuit (TX-CLK)

19 band-pass filter (BPF)   20 A/D converter

21 demodulator (DEM)   23 timing extractor

231 power calculation circuit (PWR)   232 band-pass filter (BPF)

233 vectorizing circuit

24 PLL circuit/voltage controlled crystal oscillator (PLL/VCXO)

241 comparator   242 low-pass filter (LPF)

243 secondary PLL circuit   244 D/A converter

245 voltage controlled crystal oscillator (VCXO)

246 frequency divider

25 equalizer (EQL)   26 carrier automatic phase controller (CAPC)

27 decision portion (DEC)

28 difference calculator-N/G converter (difference-N/G)
29 P/S converter-descrambler (P/S-DSCR)
30 reception clock distributor (RX-CLK)
32 transmission signal generator
33 reception signal regenerator
52 interpolation filter           61 Hadamard multiplexer
62 time/frequency interleaver           63 DMT-guard time adder
64 zero-point inserter           65 quadrature mirror filter multiplexer
66, 67 orthogonal sequence multiplexer
70 transparent transmission line, Nyquist transmission line
71 noise canceler           72 guard time remover-DMT portion
73 time/frequency deinterleaver           74 Hadamard distributor
75 quadrature mirror filter distributor
76, 77 orthogonal sequence distributor
80 synchronizer (timing synchronization, sub-frame synchronization, Hadamard master frame synchronization)
81 amplitude phase pull-in portion

Throughout the figures, like reference numerals indicate like or corresponding components.

Best Mode for Carrying Out the Invention

Embodiment (1) (Hadamard multiplexing)

Fig.15 shows an embodiment (1) of an apparatus for realizing a data transmission method according to the present invention.
The arrangement of this apparatus is different from the modem 10 shown in Fig.27 in that a Hadamard multiplexer 61 is inserted instead of the roll-off filter 14 and the modulation circuit 15, and a Hadamard distributor 74 is inserted instead of the carrier automatic phase controller 26, the equalizer 25, the roll-off filter 22, and the demodulation circuit 21.
Also, the transmission side is provided with a synchronizing signal adder (not shown) for adding a Hadamard master frame synchronizing signal which indicates a synchronization of a block to which a Hadamard transform is performed. The reception side is provided with a Hadamard master frame synchronizer 80 for extracting the synchronizing signal to be provided to the Hadamard distributor 74.
It is to be noted that the transmission clock generation circuit (TX-CLK) 18 and the reception clock distributor 30 shown in Fig.27 are omitted in Fig.15.
In operation, the Hadamard multiplexer 61 multiplexes data received from the signal point generator 13 after performing the Hadamard transform. The multiplexed data is transformed into analog data by the D/A converter 16 to be transmitted as a signal of only a low frequency band including a frequency bandwidth (10 - 450 kHz) of a power carrier wave by the LPF 17, when the transmission line is e.g. a power line.
When the transmission signal from the transmission line is received through the reception line, the BPF 19 firstly extracts only a predetermined frequency band components (10 - 450 kHz in case of power carrier modem) to be restored to a digital signal by the A/D converter 20.
On the reception side, the synchronizer 80 extracts a Hadamard frame synchronizing signal from the received digital signal. The Hadamard distributor 74 distributes (demultiplexes) the received data by using the inverse Hadamard transform in synchronization with the synchronizing signal.
Thus, according to the method and the apparatus for the data transmission by using the Hadamard multiplexing and the Hadamard distribution, the processing load is lightened compared with e.g. the DMT system or the OFDM system, and it becomes possible to accommodate to high-speed data transmission. Also, a multi-carrier system enables an equalization corresponding to the line characteristic.
Similarly, it becomes possible to lighten the processing load of quadrature mirror filter multiplexing/distribution.

Embodiment (2) (Hadamard multiplexing (orthogonal sequence multiplexing) + transparent transmission line)

Fig.16 shows an embodiment (2) of the present invention, which is different from the embodiment (1) shown in Fig.15 in that the Nyquist transmission line (e.g. QAM transmission line) 70 which is the transparent transmission line shown in Fig.27 is connected to the subsequent stage of the Hadamard multiplexer 61, instead of the D/A converter 16 and the LPF 17 on the transmission side, and the Hadamard distributor 74 is connected to the Nyquist transmission line 70 on the reception side.

It is to be noted that in this embodiment (2) a guard time adder (shown in the same function block as the Hadamard multiplexer for convenience sake in Fig.16) is inserted between the Hadamard multiplexer 61 and the Nyquist transmission line 70 for multi-path countermeasures on the transmission side, and a guard time remover (shown in the same function block as the Hadamard distributor for convenience sake like the guard time adder) is inserted between the Nyquist transmission line 70 and the Hadamard distributor 74.

Fig.17 shows frequency characteristics of the transmission side output of the Nyquist transmission line 70, i. e. the output of the low-pass filter 17. In Figs.17(1)-(3), representation ranges of frequencies in abscissa are respectively 0-100 kHz, 0-500 kHz, and 0-5.0 MHz, and the same waveform is shown.

Thus, by connecting the Hadamard multiplexer 61 and the Hadamard distributor 74 with the Nyquist transmission line 70, it is recognized that the bandwidth is narrowed to the target bandwidth 10-450 kHz, and the unnecessary bandwidth is removed.

Embodiment (3) (Hadamard multiplexing (orthogonal sequence multiplexing) + interleave + orthogonal sequence multiplexing)

Fig.18 shows an embodiment (3) of the present invention, which is different from the embodiment (1) in that a time/frequency interleaver 62 and a DMT portion 63 of a multi-carrier system which is an orthogonal sequence multiplexing system are connected in cascade between the Hadamard multiplexer 61 and the D/A converter 16 of the embodiment (1) on the transmission side, and a DMT portion 72 and a time/frequency deinterleaver 73 are connected in cascade between the A/D converter 20 and the Hadamard distributor 74 on the reception side.

It is to be noted that an amplitude phase pull-in portion 81 (=frequency equalizer) shifts to the subsequent stage of the DMT portion 72 for timing. Also, the guard time adder (shown in the same functional block as the DMT portion 63 for convenience sake in Fig.18) for multi-path countermeasures is connected between the DMT portion 63 and the D/A converter 16, and the guard time remover (shown in the same functional block as the DMT 72 for convenience sake in Fig.18 like the adder) is connected between the A/D converter 20 and the DMT portion 72.

On the transmission side, the time/frequency interleaver 62 executes the frequency axis interleave and the time axis interleave shown in Fig.4 to the multiplexing data from the Hadamard multiplexer 61. After multi-carrier orthogonal sequence multiplexing is performed to the interleaved data by the DMT-guard time adder 63, the guard time is added to the data to be transmitted to the transmission line through the D/A converter 16 and the LPF 17.

On the reception side, the guard time remover-DMT portion 72 removes the guard time of the data received through the reception line, the BPF 19, and the A/D converter 20, and then the DMT portion 72 demodulates the signal to be provided to the time/frequency deinterleaver 73 through the amplitude phase pull-in portion 81.

The deinterleaver 73 executes deinterleave on the time axis and the frequency axis, and averages the noises put on the transmission /reception line to be provided to the Hadamard distributor 74. The Hadamard distributor 74 distributes the data in which the noises are averaged, and then executes an inverse Hadamard transform to the distributed data to be provided to the DEC 27.

Thus, on the transmission side, the Hadamard multiplexer (orthogonal sequence multiplexer) 61 and the time/frequency interleaver 62 perform noise average processing, and the DMT (orthogonal modulation) performs equalization, so that the function of averaging is separated from that of equalization and the processing is simplified, thereby enabling both of averaging and equalization to be performed.

Also on the reception side, the time/frequency deinterleaver 73 and the Hadamard distributor 74 perform the average processing, and the DMT 72 side performs the equalization processing. Thus, processing is separated and simplified, thereby enabling both of averaging and equalization to be performed.

Thus, by enhancing the speed of the multiplexing and distribution processing, it becomes possible to enhance the speed of the data transmission, to perform the averaging of the noise at a high-speed, to reduce the data transmission error, and to realize both of averaging and equalization.

Embodiment (4) (Hadamard multiplexing (orthogonal sequence multiplexing) + interleave + orthogonal sequence multiplexing)

Fig.19 shows an embodiment (4) of the present invention, which is different from that of the embodiment (3) shown in Fig.18 in that the Nyquist transmission line 70 is directly connected to the DMT-guard time adder 63 on the transmission side and to the guard time remover-DMT portion 72 on the reception side.

Thus, the removal of the unnecessary bandwidths (narrowing the bandwidth) by the Nyquist transmission line 70 shown in the embodiment (2) is made possible without occurrences of the intersymbol interference, in addition to the speed enhancement of the data transmission, the reduction of the transmission error, and both of the average and equalization processing shown in the embodiment (3).

Fig.20 is a table for obtaining the optimal carrier number in the method and the apparatus for the data transmission according to the present invention. This table shows (1) transmission rate (Bauds) per element, (2) transmission time (µs) of a single element, (3) tap number required for a transversal filter used for realizing each filter, (4) cycle number (MIPS) required for processing, (5) peak value (dB), and (6) equalization range (dB) for a carrier number.

Supposing that the determination condition is in the range of tap number: 8-32, cycle number: $\leqq$ 100 MIP, peak value: $\leqq$ 12dB, equalization range: within $\pm$6dB, 12-16 carriers are determined to be the optimal values.

Embodiment (5) (Hadamard transform (orthogonal transform) + interleave + orthogonal transform + noise canceler)

Fig.21 shows an embodiment (5) of the present invention, which is different from the embodiment (4) shown in Fig.19 in that the zero-point inserter 64 is connected in cascade between the DMT-guard time adder 63 and the Nyquist transmission line 70 on the transmission side, and the noise canceler 71 is connected in cascade between the Nyquist transmission line 70 and the guard time remover-DMT portion 72 on the reception side.

Thus, in addition to the effect shown in the embodiment (4), it becomes possible to cancel a noise whose level is high and which can not be accommodated by the interleave or the like.

Detailed operation of the noise canceler based on the zero-point inserter 64 and the noise canceler 71 will be described in the following embodiment (6) together.

Embodiment (6) (noise canceler)

Fig.22 shows an embodiment (6) of a data transmission apparatus (modem) 10 according to the present invention. This modem 10 has the same arrangement as that of the prior art modem 10 except the above-mentioned zero-point (specific signal) inserter 64 and the noise canceler 71.

The signal point generator 13 transmits a transmission signal as shown in Figs.3(1) and 4(1). Zero-points are inserted into the transmission signal by the zero-point inserter 64 of the present invention to be transmitted to the Nyquist transmission line 70.

A reception signal received by the Nyquist transmission line 70 through the transmission line $\rightarrow$ reception line is transmitted to the equalizer 25 from the roll-off filter 22 after the noise component of the transmission line is canceled by the noise canceler 71 of the present invention.

Fig.23 shows an embodiment of a noise canceler 71 shown in Fig.22, which corresponds to the noise canceler 71 shown in Fig.8.

Namely, a reception signal A (384 kB) is outputted as a signal C whose frequency is shifted by a desired rotation vector signal B by the frequency shift portion 3.

The signal C is sent to the decimator 4, where the signal is converted into a signal D (192 kB) having only the noise component shown in Fig.11(4), based on the zero-point signal (192 kB) extracted from the PLL circuit 24 shown in Fig.22.

The signal D is sent to the interpolator 5 to be outputted as a signal E (384 kB) interpolated by the filter process. Since the signal E is sent to the frequency reverse shift portion 6 and shifted toward the reverse direction to the rotation vector signal B used by the frequency shift portion 3, the signal is rotated in the reverse direction by a signal F composing a conjugated complex number with the signal B to be outputted as a signal G. It is to be noted that a delay circuit 8 is provided on the course in order that the signal F is adjusted to the timing of the output signal of the interpolator 5.

The output signal G of the frequency reverse shift portion 6 is subtracted from the reception signal A by the subtracter 7 to assume an output signal K. It is to be noted that a delay circuit 9 is also provided to the reception signal A in order to adjust the timing to the output signal of the interpolator 5 in this case.

Thus, the signal K that is the reception signal A from which the noise component is canceled is outputted from the noise canceler 71.

Fig.24 shows an embodiment of the interpolator 5 shown in Fig.23, which is composed of a zero-point inserter 51 and an interpolation filter 52.

Namely, the zero-point inserter 51 inserts the zero-points between the noises, as shown in Fig.12(2), with respect to the signal D (192 kB) composed of only the noise component outputted from the decimator 4 to be provided to the interpolation filter 52 as a signal of 384 kB transmission bandwidth.

The interpolation filter 52 can be composed of a transversal filter, which can compose various filters with a delay circuit 521 and filter coefficients C1-Cn of a multiplication circuit 522. The interpolation signal E outputted therefrom is outputted as a signal having a certain amplitude where the noise component N' at each zero-point is interpolated by the noise components N on both sides of the zero-point at the signal shown in Fig.9(4).

Fig.25 shows an embodiment of the timing extractor 23 and the VCXO type PLL circuit 24 shown in Fig.22. The timing extractor 23 is composed of a power calculation circuit (PWR) 231, a band-pass filter 232, and a vectorizing circuit 233. The PLL circuit 24 is composed of a comparator 241, a low-pass filter 242, a secondary PLL circuit 243, a D/A conversion circuit 244, a VCXO (Voltage Controlled Crystal Oscillator) circuit 245, and a frequency divider 246.

Namely, the vector signal outputted from the roll-off filter 22 is squared by the power calculation circuit 231 to calculate the power. The power value thus obtained is passed through the band-pass filter 232. Since the band-pass filter having the center frequency of 192 kHz is used in this example, desired zero-point signal information is outputted to the vectorizing circuit 233.

The vectorizing circuit 233 vectorizes the input signal by synthesizing the input signal with a signal whose phase is different by 90 degrees, and provides the same to the PLL circuit 24 as timing phase information.

In the PLL circuit 24, the timing phase information from the vectorizing circuit 233 is firstly compared with the phase of a reference point preliminarily known at the comparator 241. The phase difference is filtered to include only a low component by the low-pass filter 242, so that the controlled voltage of the VCXO 245 is controlled by the secondary PLL circuit 243 composed of two integrators and the D/A conversion circuit 244.

After performing the frequency division at the frequency divider 246, the phase information is fed back to the comparator 241 to be compared with the phase at the reference point. Thus, the phase difference between the timing phase information from the vectorizing circuit 233 and the reference point is pulled in or nullified thereby enabling the extraction of the zero-point signal whose synchronization is established. Also, the sample timing signal to the A/D converter 16 is outputted from the VCXO circuit 245, and is finally fed back to the comparator 241 to compose a phase locked loop.

As described above, a data transmission apparatus according to the present invention is arranged such that a Hadamard multiplexing/distribution, or a quadrature mirror filter multiplexing/distribution is performed. Therefore, it becomes possible to reduce load of a processing cycle number.

Also, the data transmission apparatus according to the present invention is arranged such that data is multiplexed by using an orthogonal sequence, the multiplexed data is transmitted to a transparent transmission line, and the data received from the transparent transmission line is distributed by using the orthogonal sequence. Therefore, it becomes possible to remove and narrow unnecessary bandwidths without occurrences of intersymbol interference.

Also, it becomes possible to remove (narrow) the unnecessary bandwidths and to enhance processing speed by multiplexing data by using a Hadamard sequence, multiplexing the multiplexed data by using the orthogonal sequence, transmitting the multiplexed data to the transparent transmission line, distributing the data received from the transparent transmission line with the orthogonal sequence, and distributing the distributed data by the Hadamard sequence.

Also, it becomes possible to perform high-speed averaging and a data transmission resistant to a noise variation by multiplexing data by using the orthogonal sequence, interleaving the multiplexed data on a frequency axis and a time axis, multiplexing the interleaved multiplexed data by using the orthogonal sequence, distributing the multiplexed data by using the orthogonal sequence, deinterleaving the distributed data on the frequency axis and the time axis, and distributing the deinterleaved data by using an orthogonal transform.

Also, it becomes easy to install both of averaging and line equalization by separating the averaging and the line equalization from each other.

Furthermore, it becomes possible to perform a data transmission resistant to the noise variation by using a noise canceler.

Also, by performing a multi-channel transmission by multiplexing/distribution, the line equalization becomes easy. Furthermore, it becomes possible to accommodate to a multi-path by providing a guard time.

**Claims**

1. A data transmission method **characterized by** comprising the step of multiplexing data to be transmitted by using a Hadamard sequence.

2. A data transmission method **characterized by** comprising the step of distributing received data by using a Hadamard sequence.

3. A data transmission method **characterized by** comprising the step of multiplexing data to be transmitted by using a quadrature mirror filter.

4. A data transmission method **characterized by** comprising the step of distributing received data by using a quadrature mirror filter.

5. A data transmission method **characterized by** comprising the steps of :

multiplexing data by using an orthogonal sequence; and
transmitting the multiplexed data to a transparent transmission line.

6. A data transmission method **characterized by** comprising the steps of :

receiving data from a transparent transmission line; and
distributing the data by using an orthogonal sequence.

7. The data transmission method as claimed in claim 5 or 6, **characterized in that** the orthogonal sequence comprises any of a Hadamard sequence, a Wavelet transform, a quadrature mirror filter, a DMT, and an OFDM.

8. The data transmission method as claimed in claim 5, **characterized in that** the multiplexing step comprises the steps of multiplexing data by using a Hadamard sequence, and of multiplexing the multiplexed data by using an orthogonal sequence.

9. The data transmission method as claimed in claim 6, **characterized in that** the distributing step comprises the steps of distributing data by using an orthogonal sequence, and of distributing the distributed data by using a Hadamard sequence.

10. A data transmission method **characterized by** comprising the steps of:

multiplexing data by using a first orthogonal sequence;
interleaving the multiplexed data on a frequency axis and a time axis; and
multiplexing the interleaved multiplexed data to be transmitted by using a second orthogonal sequence.

11. A data transmission method **characterized by** comprising the steps of:

distributing received data by using a second orthogonal sequence;
deinterleaving the distributed data on a frequency axis and a time axis; and
distributing the deinterleaved data by using a first orthogonal sequence.

12. The data transmission method as claimed in claim 10 or 11, **characterized in that** the first orthogonal sequence comprises a Hadamard sequence.

13. The data transmission method as claimed in claim 5, **characterized by** further comprising the step of periodically inserting a zero-point into the multiplexed data between the multiplexing and transmitting steps.

14. The data transmission method as claimed in claim 6, **characterized by** further comprising the steps of interpolating a noise component of the data by using a zero-point periodically included in the received data, and of reproducing original data transmitted by subtracting the noise component from the data between the receiving and distributing steps.

15. The data transmission method as claimed in claim 10, **characterized by** further comprising the step of periodically inserting a zero-point into the multiplexed data after the second multiplexing step.

16. The data transmission method as claimed in claim 11, **characterized by** further comprising the steps of interpolating a noise component of the data by using a zero-point periodically included in the received data, and of reproducing original data transmitted by subtracting the noise component from the data before the second distributing step.

17. The data transmission method as claimed in claim 5 or 6, **characterized in that** the transparent transmission line comprises a Nyquist transmission line.

18. The data transmission method as claimed in claim 17, **characterized in that** the Nyquist transmission line comprises either a QAM transmission line or a spread spectrum transmission line.

19. The data transmission method as claimed in claim 10, **characterized in that** the interleave is performed by a PN sequence.

**20.** The data transmission method as claimed in claim 11, **characterized in that** the deinterleave is performed by a PN sequence.

**21.** The data transmission method as claimed in claim 5, **characterized by** further comprising the step of adding a guard time to the transmitted data between the multiplexing and transmitting steps.

**22.** The data transmission method as claimed in claim 6, **characterized by** further comprising the step of removing a guard time from the received data between the receiving and distributing steps.

**23.** The data transmission method as claimed in claim 10, **characterized by** further comprising the step of adding a guard time after the second multiplexing step.

**24.** The data transmission method as claimed in claim 11, **characterized by** further comprising the step of removing a guard time before the second distributing step.

**25.** The data transmission method as claimed in claim 1, 3, 5, or 10, **characterized by** further comprising the step of transmitting a frame synchronizing signal of the multiplexed data.

**26.** The data transmission method as claimed in claim 2, 4, 6, or 11, **characterized by** further comprising the step of detecting a frame synchronizing signal,
the distributing step distributing the data based on the frame synchronizing signal.

**27.** A data transmission apparatus **characterized by** comprising:

means for multiplexing data by using a Hadamard sequence; and
means for transmitting the multiplexed data.

**28.** A data transmission apparatus **characterized by** comprising:

means for receiving data; and
means for distributing the received data by using a Hadamard sequence.

**29.** A data transmission apparatus **characterized by** comprising:

means for multiplexing data by using a quadrature mirror filter; and
means for transmitting the multiplexed data.

**30.** A data transmission apparatus **characterized by** comprising:

means for receiving data; and
means for distributing the received data by using a quadrature mirror filter.

**31.** A data transmission apparatus **characterized by** comprising:

means for multiplexing data by using an orthogonal sequence; and
means for transmitting the multiplexed data to a transparent transmission line.

**32.** A data transmission apparatus **characterized by** comprising:

means for receiving data from a transparent transmission line; and
means for distributing the data by using an orthogonal sequence.

**33.** The data transmission apparatus as claimed in claim 31 or 32, **characterized in that** the orthogonal sequence comprises any of a Hadamard sequence, a Wavelet transform, a quadrature mirror filter, a DMT, and an OFDM.

**34.** The data transmission apparatus as claimed in claim 31, **characterized in that** the multiplexing means comprise means for multiplexing data by using a Hadamard sequence, and for multiplexing the multiplexed data by using an orthogonal sequence.

**35.** The data transmission apparatus as claimed in claim 32, **characterized in that** the distributing means comprise means for distributing data by using an orthogonal sequence, and for distributing the distributed data by using a Hadamard sequence.

**36.** A data transmission apparatus **characterized by** comprising:

means for multiplexing data by using a first orthogonal sequence;
means for interleaving the multiplexed data on a frequency axis and a time axis; and
means for multiplexing the interleaved multiplexed data to be transmitted by using a second orthogonal sequence.

**37.** A data transmission apparatus **characterized by** comprising:

means for distributing received data by using a second orthogonal sequence;
means for deinterleaving the distributed data on a frequency axis and a time axis; and
means for distributing the deinterleaved data by using a first orthogonal sequence.

**38.** The data transmission apparatus as claimed in claim 36 or 37, **characterized in that** the first orthogonal sequence comprises a Hadamard sequence.

**39.** The data transmission apparatus as claimed in claim 31, **characterized by** further comprising means for periodically inserting a zero-point into the multiplexed data between the multiplexing and transmitting means.

**40.** The data transmission apparatus as claimed in claim 32, **characterized by** further comprising means for interpolating a noise component of the data by using a zero-point periodically included in the received data, and for reproducing original data transmitted by subtracting the noise component from the data between the receiving and distributing means.

**41.** The data transmission apparatus as claimed in claim 36, **characterized by** further comprising means for periodically inserting a zero-point into the multiplexed data after the second multiplexing means.

**42.** The data transmission apparatus as claimed in claim 37, **characterized by** further comprising means for interpolating a noise component of the data by using a zero-point periodically included in the received data, and for reproducing original data transmitted by subtracting the noise component from the data before the second distributing means.

**43.** The data transmission apparatus as claimed in claim 31 or 32, **characterized in that** the transparent transmission line comprises a Nyquist transmission line.

**44.** The data transmission apparatus as claimed in claim 43, **characterized in that** the Nyquist transmission line comprises either a QAM transmission line or a spread spectrum transmission line.

**45.** The data transmission apparatus as claimed in claim 36, **characterized in that** the interleave is performed by a PN sequence.

**46.** The data transmission apparatus as claimed in claim 37, **characterized in that** the deinterleave is performed by a PN sequence.

**47.** The data transmission apparatus as claimed in claim 31, **characterized by** further comprising means for adding a guard time to the transmitted data between the multiplexing and transmitting means.

**48.** The data transmission apparatus as claimed in claim 32, **characterized by** further comprising means for removing a guard time from the received data between the receiving and distributing means.

**49.** The data transmission apparatus as claimed in claim 36, **characterized by** further comprising means for adding a guard time after the second multiplexing means.

**50.** The data transmission apparatus as claimed in claim 37, **characterized by** further comprising means for removing a guard time before the second distributing means.

**51.** The data transmission apparatus as claimed in claim 27, 29, 31, or 36, **characterized by** further comprising means for transmitting a frame synchronizing signal of the multiplexed data.

**52.** The data transmission apparatus as claimed in claim 28, 30, 32, or 37, **characterized by** further comprising means for detecting a frame synchronizing signal,
   the distributing means distributing the data based on the frame synchronizing signal.

FIG. 1

TRANSMISSION SIDE ⟷ RECEPTION SIDE

(1)
HADAMARD MULTIPLEXING — 61 → HADAMARD DISTRIBUTION — 74

(2)
QUADRATURE MIRROR FILTER MULTIPLEXING — 65 → QUADRATURE MIRROR FILTER DISTRIBUTION — 75

(3)
ORTHOGONAL SEQUENCE MULTIPLEXING — 66 → TRANSPARENT TRANSMISSION LINE (NYQUIST TRANSMISSION LINE) — 70 → ORTHOGONAL SEQUENCE DISTRIBUTION — 76

(4)
HADAMARD MULTIPLEXING — 61 → ORTHOGONAL SEQUENCE MULTIPLEXING — 66
ORTHOGONAL SEQUENCE DISTRIBUTION — 76 → HADAMARD DISTRIBUTION — 74

(5)
FIRST ORTHOGONAL SEQUENCE MULTIPLEXING — 67 → INTERLEAVE — 62 → SECOND ORTHOGONAL SEQUENCE MULTIPLEXING — 66 → SECOND ORTHOGONAL SEQUENCE DISTRIBUTION — 76 → DEINTERLEAVE — 73 → FIRST ORTHOGONAL SEQUENCE DISTRIBUTION — 77

EP 1 341 332 A1

# FIG. 2

(1)

PWR

TRANSMISSION SIGNAL

FREQUENCY

UNNECESSARY BANDWIDTH — BANDWIDTH — UNNECESSARY BANDWIDTH

(2)

PWR

ALIASING

ALIASING

TRANSMISSION SIGNAL

FREQUENCY

EP 1 341 332 A1

FIG. 3

FIG. 4

TIME AXIS t

FREQUENCY AXIS f

|      | 1 | 2 | 3 | 4 | 5 | 6 | 7 | 8 | 9 | 10 | 11 | 12 | 13 | 14 | 15 | 16 |
|------|---|---|---|---|---|---|---|---|---|----|----|----|----|----|----|----|
| CH1  | 5 |   |   |   |   |   |   |   |   |    |    |    |    |    |    |    |
| CH2  |   |   |   |   |   |   | 4 |   |   |    |    |    |    |    |    |    |
| CH3  |   |   |   |   |   |   |   |   |   |    |    |    |    |    |    | 13 |
| CH4  |   |   |   | 11|   |   |   |   |   |    |    |    |    |    |    |    |
| CH5  |   | 1 |   |   |   |   |   |   |   |    |    |    |    |    |    |    |
| CH6  |   |   |   |   |   |   |   |   |   |    |    | 6  |    |    |    |    |
| CH7  |   |   |   |   |   |   |   |   | 9 |    |    |    |    |    |    |    |
| CH8  |   |   |   |   |   |   |   |   |   |    |    |    |    |    | 15 |    |
| CH9  |   |   |   |   | 2 |   |   |   |   |    |    |    |    |    |    |    |
| CH10 |   |   |   |   |   |   |   |   |   | 16 |    |    |    |    |    |    |
| CH11 |   |   | 12|   |   |   |   |   |   |    |    |    |    |    |    |    |
| CH12 |   |   |   |   |   |   |   |   |   |    |    |    |    | 14 |    |    |
| CH13 |   |   |   |   |   |   |   |   |   |    | 7  |    |    |    |    |    |
| CH14 |   |   |   |   |   | 10|   |   |   |    |    |    |    |    |    |    |
| CH15 |   |   |   |   |   |   |   | 8 |   |    |    |    |    |    |    |    |
| CH16 |   |   |   |   |   |   |   |   |   |    |    |    | 3  |    |    |    |

EP 1 341 332 A1

# FIG. 5

| NO | 0 | 1 | 2 | 3 | 4 | 5 | 6 | 7 | 8 | 9 | 10 | 11 | 12 | 13 | 14 | Σ |
|---|---|---|---|---|---|---|---|---|---|---|---|---|---|---|---|---|
| B | 1 | 1 | 1 | 1 | 0 | 1 | 0 | 1 | 1 | 0 | 0 | 1 | 0 | 0 | 0 | |
| B | 1 | 1 | 1 | 1 | -1 | 1 | -1 | 1 | 1 | -1 | -1 | 1 | -1 | -1 | -1 | |
| 0th | 1 | 1 | 1 | 1 | -1 | 1 | -1 | 1 | 1 | -1 | -1 | 1 | -1 | -1 | -1 | |
| C | 1 | 1 | 1 | 1 | 1 | 1 | 1 | 1 | 1 | 1 | 1 | 1 | 1 | 1 | 1 | 15 |
| B | 1 | 1 | 1 | 1 | -1 | 1 | -1 | 1 | 1 | -1 | -1 | 1 | -1 | -1 | -1 | |
| +1st | -1 | 1 | 1 | 1 | 1 | -1 | 1 | -1 | 1 | 1 | -1 | -1 | 1 | -1 | -1 | |
| C | -1 | 1 | 1 | 1 | -1 | -1 | -1 | -1 | 1 | -1 | 1 | -1 | -1 | 1 | 1 | -1 |
| B | 1 | 1 | 1 | 1 | -1 | 1 | -1 | 1 | 1 | -1 | -1 | 1 | -1 | -1 | -1 | |
| +2nd | -1 | -1 | 1 | 1 | 1 | 1 | 1 | -1 | 1 | 1 | 1 | -1 | -1 | 1 | 1 | |
| C | -1 | -1 | 1 | 1 | -1 | 1 | -1 | -1 | 1 | -1 | -1 | -1 | 1 | -1 | 1 | -1 |
| B | 1 | 1 | 1 | 1 | -1 | 1 | -1 | 1 | 1 | -1 | -1 | 1 | -1 | -1 | -1 | |
| +3rd | -1 | -1 | -1 | 1 | 1 | 1 | 1 | -1 | 1 | 1 | 1 | 1 | -1 | -1 | 1 | |
| C | -1 | -1 | -1 | 1 | -1 | 1 | -1 | -1 | 1 | -1 | -1 | 1 | 1 | 1 | -1 | -1 |
| B | 1 | 1 | 1 | 1 | -1 | 1 | -1 | 1 | 1 | -1 | -1 | 1 | -1 | -1 | -1 | |
| +4th | 1 | -1 | -1 | -1 | 1 | 1 | 1 | 1 | -1 | 1 | 1 | 1 | -1 | -1 | -1 | |
| C | 1 | -1 | -1 | -1 | -1 | 1 | -1 | 1 | -1 | -1 | -1 | 1 | 1 | 1 | 1 | +1 |
| B | 1 | 1 | 1 | 1 | -1 | 1 | -1 | 1 | 1 | -1 | -1 | 1 | -1 | -1 | -1 | |
| +5th | -1 | 1 | -1 | -1 | -1 | 1 | 1 | 1 | 1 | -1 | 1 | -1 | 1 | 1 | -1 | |
| C | -1 | 1 | -1 | -1 | 1 | 1 | -1 | 1 | 1 | 1 | -1 | -1 | -1 | -1 | 1 | -1 |
| B | 1 | 1 | 1 | 1 | -1 | 1 | -1 | 1 | 1 | -1 | -1 | 1 | -1 | -1 | -1 | |
| +6th | -1 | -1 | 1 | -1 | -1 | -1 | 1 | 1 | 1 | 1 | -1 | 1 | -1 | 1 | 1 | |
| C | -1 | -1 | 1 | -1 | 1 | -1 | -1 | 1 | 1 | -1 | 1 | 1 | 1 | -1 | -1 | -1 |
| B | 1 | 1 | 1 | 1 | -1 | 1 | -1 | 1 | 1 | -1 | -1 | 1 | -1 | -1 | -1 | |
| +7th | 1 | -1 | -1 | 1 | -1 | -1 | 1 | 1 | 1 | 1 | 1 | -1 | 1 | -1 | 1 | |
| C | 1 | -1 | -1 | 1 | 1 | -1 | -1 | 1 | 1 | -1 | -1 | -1 | -1 | 1 | -1 | +1 |

| NO | 0 | 1 | 2 | 3 | 4 | 5 | 6 | 7 | 8 | 9 | 10 | 11 | 12 | 13 | 14 | Σ |
|---|---|---|---|---|---|---|---|---|---|---|---|---|---|---|---|---|
| B | 1 | 1 | 1 | 1 | 0 | 1 | 0 | 1 | 1 | 0 | 0 | 1 | 0 | 0 | 0 | |
| B | 1 | 1 | 1 | 1 | -1 | 1 | -1 | 1 | 1 | -1 | -1 | 1 | -1 | -1 | -1 | |
| +8th | 1 | 1 | -1 | -1 | 1 | -1 | -1 | -1 | 1 | 1 | 1 | 1 | -1 | 1 | -1 | |
| C | 1 | 1 | -1 | -1 | -1 | -1 | 1 | -1 | 1 | -1 | -1 | 1 | 1 | -1 | 1 | -1 |
| B | 1 | 1 | 1 | 1 | -1 | 1 | -1 | 1 | 1 | -1 | -1 | 1 | -1 | -1 | -1 | |
| +9th | -1 | 1 | 1 | -1 | -1 | 1 | -1 | -1 | -1 | 1 | 1 | 1 | 1 | -1 | 1 | |
| C | -1 | 1 | 1 | -1 | 1 | 1 | 1 | -1 | -1 | -1 | -1 | 1 | -1 | 1 | -1 | -1 |
| B | 1 | 1 | 1 | 1 | -1 | 1 | -1 | 1 | 1 | -1 | -1 | 1 | -1 | -1 | -1 | |
| +10th | 1 | -1 | 1 | 1 | -1 | -1 | 1 | -1 | -1 | 1 | 1 | 1 | 1 | 1 | -1 | |
| C | 1 | -1 | 1 | 1 | 1 | -1 | -1 | -1 | -1 | -1 | -1 | 1 | -1 | -1 | 1 | -1 |
| B | 1 | 1 | 1 | 1 | -1 | 1 | -1 | 1 | 1 | -1 | -1 | 1 | -1 | -1 | -1 | |
| +11th | -1 | 1 | -1 | 1 | 1 | 1 | -1 | 1 | -1 | -1 | 1 | 1 | 1 | 1 | 1 | |
| C | -1 | 1 | -1 | 1 | -1 | 1 | 1 | 1 | -1 | 1 | -1 | 1 | -1 | -1 | -1 | -1 |
| B | 1 | 1 | 1 | 1 | -1 | 1 | -1 | 1 | 1 | -1 | -1 | 1 | -1 | -1 | -1 | |
| +12th | 1 | -1 | 1 | -1 | 1 | 1 | -1 | -1 | 1 | -1 | -1 | -1 | 1 | 1 | 1 | |
| C | 1 | -1 | 1 | -1 | -1 | 1 | 1 | -1 | 1 | 1 | 1 | -1 | -1 | -1 | -1 | -1 |
| B | 1 | 1 | 1 | 1 | -1 | 1 | -1 | 1 | 1 | -1 | -1 | 1 | -1 | -1 | -1 | |
| +13th | 1 | 1 | -1 | 1 | -1 | 1 | 1 | -1 | -1 | 1 | -1 | -1 | -1 | 1 | 1 | |
| C | 1 | 1 | -1 | 1 | 1 | 1 | -1 | -1 | -1 | -1 | 1 | -1 | 1 | -1 | -1 | -1 |
| B | 1 | 1 | 1 | 1 | -1 | 1 | -1 | 1 | 1 | -1 | -1 | 1 | -1 | -1 | -1 | |
| +14th | 1 | 1 | 1 | -1 | 1 | -1 | 1 | 1 | -1 | 1 | -1 | 1 | -1 | -1 | 1 | |
| C | 1 | 1 | 1 | -1 | -1 | -1 | -1 | 1 | -1 | -1 | 1 | 1 | 1 | 1 | -1 | -1 |
| B | 1 | 1 | 1 | 1 | -1 | 1 | -1 | 1 | 1 | -1 | -1 | 1 | -1 | -1 | -1 | |
| +0th | 1 | 1 | 1 | 1 | 1 | 1 | -1 | 1 | 1 | -1 | 1 | -1 | 1 | -1 | -1 | |
| C | 1 | 1 | 1 | 1 | 1 | 1 | 1 | 1 | 1 | 1 | 1 | 1 | 1 | 1 | 1 | 15 |

BASIC:B  CORRELATION:C

TRANSMISSION : ARRANGEMENT OF BINARY SIGNAL POINTS  0=0° , 1=180°
RECEPTION : MULTIPLICATION OF COMPLEX CONJUGATE VALUE 0=0° , 1=180°  (SAME VALUE)

# FIG. 6

UNEVEN NOISE N1

N3 DISTRIBUTED NOISE IN PRIOR ART

N2

N4 DISTRIBUTED NOISE IN PRESENT INVENTION

(1)

(2)

EP 1 341 332 A1

# FIG. 7

(1) PRIOR ART

(2) PRESENT INVENTION

EP 1 341 332 A1

FIG. 8

(1) PRIOR ART

32 TRANSMISSION SIGNAL GENERATOR → 70 NYQUIST TRANSMISSION LINE → 33 RECEPTION SIGNAL REGENERATOR

(2) PRESENT INVENTION

32 TRANSMISSION SIGNAL GENERATOR → 64 SPECIFIC SIGNAL (ZERO-POINT) INSERTER → 70 NYQUIST TRANSMISSION LINE →

71 NOISE CANCELER:
3 FREQUENCY SHIFT PORTION → 4 DECIMATOR (DCM) → 5 INTERPOLATOR (IPL) → 6 FREQUENCY REVERSE SHIFT PORTION → 7 SUBTRACTER → 33 RECEPTION SIGNAL REGENERATOR

27

# FIG. 9

(1) 192kB TRANSMISSION

(2) TRANSMISSION AFTER ZERO-POINT INSERTION

ZERO-POINT ZERO-POINT

(3) RECEPTION SIGNAL

(4) NOISE INTERPOLATION SIGNAL

(5) AFTER NOISE CANCELATION

384kB

192kB

S:SIGNAL   N:NOISE

EP 1 341 332 A1

# FIG. 10

(1) SIGNAL POINT ON TRANSMISSION SIDE (UPON 192kB TRANSMISSION AFTER GENERATING TRANSMISSION SIGNAL POINT)

(2) SIGNAL POINT ON TRANSMISSION SIDE (384kB AFTER ZERO-POINT INSERTION)

(3) SIGNAL POINT ON RECEPTION SIDE (384kB AFTER NYQUIST TRANSMISSION LINE)

EP 1 341 332 A1

# FIG. 11

(1)    SAMPLE VALUE & SPECTRUM OF SIGNAL S(n)

(2)    SAMPLE VALUE & SPECTRUM OF SIGNAL $(-1)^n * S(n)$

(3)    SAMPLE VALUE & SPECTRUM OF SIGNAL t(n)

(4)    SAMPLE VALUE & SPECTRUM OF SIGNAL u(n)

EP 1 341 332 A1

# FIG. 12

(1)     SAMPLE VALUE & SPECTRUM OF SIGNAL u(n)

(2)     SAMPLE VALUE & SPECTRUM OF SIGNAL t(n)

EP 1 341 332 A1

# FIG. 13

① NOISE DISTRIBUTION

② +96kHz SHIFT    ③ DECIMATOR(DCM)    ④ INTERPOLATION(IPL) ⑤ -96kHz SHIFT    ⑥ NOISE CANCELATION

TRANSMISSION SIGNAL GENERATOR ~32

SPECIFIC SIGNAL (ZERO-POINT) INSERTER ~64

NYQUIST TRANSMISSION LINE ~70

71 NOISE CANCELER

SUBTRACTER 7

RECEPTION SIGNAL REGENERATOR ~33

FREQUENCY SHIFT PORTION 3

DECIMATOR (DCM) 4

INTER-POLATOR (IPL) 5

FREQUENCY REVERSE SHIFT PORTION 6

EP 1 341 332 A1

## FIG. 14

(1) ZERO-POINT:
INSERTED INTO EVERY 4TH SIGNAL POINT
INTERPOLATED NOISE BANDWIDTH: 96kHz

O-POINT

(2) ZERO-POINT:
INSERTED INTO EVERY 3RD SIGNAL POINT
INTERPOLATED NOISE BANDWIDTH: 128kHz

O-POINT

(3) ZERO-POINT:
INSERTED INTO EVERY OTHER SIGNAL POINT
INTERPOLATED NOISE BANDWIDTH: 192kHz

O-POINT

(4) ZERO-POINT: 2 ZERO-POINTS INSERTED
BETWEEN SIGNAL POINTS
INTERPOLATED NOISE BANDWIDTH: 256kHz

O-POINT

(5) ZERO-POINT: 3 ZERO-POINTS INSERTED
BETWEEN SIGNAL POINTS
INTERPOLATED NOISE BANDWIDTH: 288kHz

O-POINT

384kB

192kB

EP 1 341 332 A1

EP 1 341 332 A1

FIG. 15

10 DATA TRANSMISSION APPARATUS

TRANSMISSION
SIGNAL
SD → [SCR S/P (11)] → [G/N SUM (12)] → [SIGNAL POINT GENERATOR (13)] → [HADAMARD MULTIPLEXER (61)] → [D/A (16)] → [LPF (17)] → TRANSMISSION LINE

RECEPTION
SIGNAL
RD ← [P/S DSCR (29)] ← [DIFFERENCE N/G (28)] ← [DEC (27)] ← [AMPLITUDE PHASE PULL-IN PORTION (75)] ← [HADAMARD DISTRIBUTOR (74)] ← [A/D (20)] ← [BPF (19)] ← RECEPTION LINE

[SYNCHRONIZER (HADAMARD MASTER FRAME SYNCHRONIZATION) (80)]

# FIG. 16

10 DATA TRANSMISSION APPARATUS

NYQUIST TRANSMISSION LINE 70

TRANSMISSION SIGNAL SD →

| 11 SCR S/P | 12 G/N SUM | 13 SIGNAL POINT GENERATOR | 61 HADAMARD MULTIPLEXER GUARD TIME ADDER | 14 ROF | 15 MOD | 16 D/A | 17 LPF | → TRANSMIS-SION LINE |

RECEPTION SIGNAL RD ←

| 29 P/S DSCR | 28 DIFFER-ENCE N/G | 27 DEC | 81 AMPLI-TUDE PHASE PULL-IN PORTION | 74 GUARD TIME REMOVER HADAMARD DISTRIBUTOR | 22 ROF | 21 DEM | 20 A/D | 19 BPF | ← RECEPTION LINE |

80 SYNCHRONIZER
TIMING SYNCHRONIZATION
HADAMARD MASTER FRAME SYNCHRONIZATION

35

FIG. 17

| ABSCISSA : 0-100kHz, RBW=100HZ<br>ORDINATE : 10dB/div., CENTER-40dBm |

(1)

| ABSCISSA : 0-500kHz, RBW=1kHZ<br>ORDINATE : 10dB/div., CENTER-40dBm |

(2)

| ABSCISSA : 0-5.0MHz, RBW=1kHZ<br>ORDINATE : 10dB/div., CENTER-40dBm |

(3)

EP 1 341 332 A1

FIG. 18

FIG. 19

10 DATA TRANSMISSION APPARATUS / NYQUIST TRANSMISSION LINE 70

TRANSMISSION SIGNAL SD → 11 SCR S/P → 12 G/N SUM → 13 SIGNAL POINT GENERATOR → 61 HADAMARD MULTIPLEXER → 62 TIME/FREQUENCY INTERLEAVER → 63 DMT (IFFT) GUARD TIME ADDER → 14 ROF → 15 MOD → 16 D/A → 17 LPF → TRANSMISSION LINE

RECEPTION SIGNAL RD ← 29 P/S DSCR ← 28 DIFFERENCE N/G ← 27 DEC ← 74 HADAMARD DISTRIBUTOR ← 73 TIME/FREQUENCY DEINTERLEAVER ← 81 AMPLITUDE PHASE PULL-IN PORTION ← 72 GUARD TIME REMOVER DMT (FFT) ← 22 ROF ← 21 DEM ← 20 A/D ← 19 BPF ← RECEPTION LINE

80 SYNCHRONIZER

TIM PULL-IN
{ SUB-FRAME SYNCHRONIZATION
MASTER FRAME SYNCHRONIZATION }

# FIG. 20

| CARRIER NUMBER | Bauds [KB] | Bauds [μs] | tap NUMBER [tap] | | CYCLE NUMBER [MIPS] | | Peak VALUE [dB] | | EQUALIZATION RANGE [dB] | | TOTAL DETERMINATION |
|---|---|---|---|---|---|---|---|---|---|---|---|
| 1 | 384.00 | 2.6 | ○ | 25 | ○ | 96 | ○ | 0 | ▲ | 40 | — |
| 1 | 440.00 | 2.3 | ▲ | 256 | ▲ | 1126 | ○ | 0 | ▲ | 40 | ▲ |
| 2 | 220.00 | 4.5 | ▲ | 128 | ▲ | 563 | ○ | 3 | ▲ | 20 | ▲ |
| 4 | 110.00 | 9.1 | ▲ | 64 | ▲ | 282 | ○ | 6 | ▲ | 10 | ▲ |
| 8 | 55.00 | 18.2 | ○ | 32 | ▲ | 141 | ○ | 9 | ○ | 5 | ▲ |
| 9 | 48.89 | 20.5 | ○ | 28 | ▲ | 125 | ○ | 10 | ○ | 4 | ▲ |
| 10 | 44.00 | 22.7 | ○ | 26 | ▲ | 113 | ○ | 10 | ○ | 4 | ▲ |
| 11 | 40.00 | 25.0 | ○ | 23 | ▲ | 102 | ○ | 10 | ○ | 4 | ▲ |
| 12 | 36.67 | 27.3 | ○ | 21 | ○ | 94 | ○ | 11 | ○ | 3 | ○ |
| 13 | 33.85 | 29.5 | ○ | 20 | ○ | 87 | ○ | 11 | ○ | 3 | ○ |
| 14 | 31.43 | 31.8 | ○ | 18 | ○ | 80 | ○ | 11 | ○ | 3 | ○ |
| 15 | 29.33 | 34.1 | ○ | 17 | ○ | 75 | ○ | 12 | ○ | 3 | ○ |
| 16 | 27.50 | 36.4 | ○ | 16 | ○ | 70 | ○ | 12 | ○ | 3 | ○ |
| 17 | 25.88 | 38.6 | ○ | 15 | ○ | 66 | ▲ | 12 | ○ | 2 | ▲ |
| 32 | 13.75 | 72.7 | ▲ | 8 | ○ | 35 | ▲ | 15 | ○ | 1 | ▲ |
| 64 | 6.88 | 145.5 | ▲ | 4 | ○ | 18 | ▲ | 18 | ○ | 1 | ▲ |
| 128 | 3.44 | 290.9 | ▲ | 2 | ○ | 9 | ▲ | 21 | ○ | 0 | ▲ |
| 256 | 1.72 | 581.8 | ▲ | 1 | ○ | 4 | ▲ | 24 | ○ | 0 | ▲ |
| 512 | 0.86 | 1163.6 | ▲ | 1 | ○ | 2 | ▲ | 27 | ○ | 0 | ▲ |

Brace spanning rows 12–16: DETERMINE THAT 12–16 CARRIERS ARE OPTIMAL VALUES

DETEMINATION CONDITION

□tap NUMBER : RANGE OVER 8–32 taps

□CYCLE NUMBER : ≦ 100 MIPS

□Peak VALUE : ≦ 12dB

□EQUALIZATION RANGE : WITHIN ±6dB

EP 1 341 332 A1

## FIG. 21

10 DATA TRANSMISSION APPARATUS　　　　　NYQUIST TRANSMISSION LINE　70

TRANSMISSION SIGNAL SD →

| 11 SCR S/P | 12 G/N SUM | 13 SIGNAL POINT GENERA-TOR | 61 HADAMARD MULTI-PLEXER | 62 TIME/ FREQUENCY INTER-LEAVER | 63 DMT (IFFT) GUARD TIME ADDER | 64 ZERO-POINT INSERTER | 14 ROF | 15 MOD | 16 D/A | 17 LPF |

→ TRANSMIS-SION LINE

RECEPTION SIGNAL RD ←

| 29 P/S DSCR | 28 DIFFER-ENCE N/G | 27 DEC | 74 HADAMARD DISTRIB-UTOR | 73 TIME/ FREQUENCY DEINTER-LEAVER | 81 AMPLI-TUDE PHASE PULL-IN PORTION | 72 GUARD TIME REMOVER DMT (FFT) | 71 NOISE CANCELER | 22 ROF | 21 DEM | 20 A/D | 19 BPF |

← RECEPTION LINE

SYNCHRONIZER { TIM PULL-IN / SUB-FRAME SYNCHRONIZATION / MASTER FRAME SYNCHRONIZATION }　　80

EP 1 341 332 A1

# FIG. 22

**10 MODEM**

**NYQUIST TRANSMISSION LINE 70**

(1)

TRANSMISSION SIGNAL SD →

| 11 | 12 | 13 |
|---|---|---|
| SCR S/P | G/N SUM | SIGNAL POINT GENERA TOR |

→ 64 SPECIFIC SIGNAL (ZERO-POINT) INSERTER

| 14 | 15 | 16 | 17 |
|---|---|---|---|
| ROF | MOD | D/A | LPF |

→ TRANSMIS-SION LINE

18 TX-CLK → TO EACH PORTION

| 29 | 28 | 27 | 26 | 25 | 71 | 22 | 21 | 20 | 19 |
|---|---|---|---|---|---|---|---|---|---|
| P/S DSCR | DIFFER-ENCE N/G | DEC | CAPC | EQL | NOISE CANCE-LER | ROF | DEM | A/D | BPF |

← RECEPTION SIGNAL RD

RECEPTION LINE

| 23 | 24 |
|---|---|
| TIM EXTRAC-TOR | PLL VCXO |

30 RX-CLK

ZERO-POINT SIGNAL

TO EACH PORTION

ZERO-POINT SIGNAL

(2)

NYQUIST INTERVAL 384kB

ZERO-POINT

TIME AXIS t

EP 1 341 332 A1

FIG. 23

RECEPTION SIGNAL (x+jy)

ZERO-POINT SIGNAL

384kB

$C = [(xcoswt-ysinwt) + j(xsinwt+ycoswt)]$

FREQUENCY SHIFT PORTION 3

DECIMATOR (DCM) 4

DELAY CIRCUIT 9

T/2 = T/2 = T/2

384kB

K

SIGNAL AFTER NOISE CANCELATION (384kB)

FREQUENCY REVERSE SHIFT PORTION 6

A    C

B

INTERPOLATOR (IPL)

E    G

*

192kB

192kB DELAY CIRCUIT 8

T/2 = T/2 = T/2

F

$+f0 = (coswt+jsinwt)$

EP 1 341 332 A1

# FIG. 24

NOISE SIGNAL (D)
SAMPLING INTERVAL T

ZERO-POINT INSERTER 51

521

T/2 T/2 T/2 T/2

192kB

384kB

522

C1 C2 C3 Cn

384kB

INTERPOLATION FILTER 52

$\Sigma$

INTERPOLATION SIGNAL (E)

5

EP 1 341 332 A1

**FIG. 25**

FROM ROF → [PWR (231)] → [BPF (232)] → [VECTO-RIZING (233)] ⟨23⟩ → [COMPARA-TOR (241)] → [LPF (242)] → [SECOND-ARY PLL (243)] → [D/A (244)] → [VCXO (245)] → [FREQUENCY DIVIDER (246)] → ZERO-POINT SIGNAL

REFERENCE POINT

TO A/D CONVERTER

24

23

(TIME INFORMATION AT REFERENCE POINT)

EP 1 341 332 A1

FIG. 26

PWR

TX SPECTRUM OF
TRANSMISSION SIGNAL

FREQUENCY

(1)

LINE CHARACTERISTIC   PWR

L    C1   C2

(2)

PWR

N  NOISE LEVEL

RX SPECTRUM OF RECEPTION SIGNAL

FREQUENCY

(3)

EP 1 341 332 A1

# FIG. 27

(1)

10 MODEM

NYQUIST TRANSMISSION LINE 70

TRANSMISSION SIGNAL SD →

| 11 SCR S/P | 12 G/N SUM | 13 SIGNAL POINT GENERATOR |

| 14 ROF | 15 MOD | 16 D/A | 17 LPF | → TRANSMIS- SION LINE

18 TX-CLK → TO EACH PORTION

RECEPTION SIGNAL RD ←

| 29 P/S DSCR | 28 DIFFER- ENCE N/G | 27 DEC | 26 CAPC | 25 EQL |

| 22 ROF | 21 DEM | 20 A/D | 19 BPF | ← RECEPTION LINE

| 23 TIM EXTRAC- TOR | 24 PLL VCXO |

30 RX-CLK → TO EACH PORTION

ZERO-POINT SIGNAL

(2)

NYQUIST INTERVAL 384kB

ZERO-POINT

TIME AXIS t

46

EP 1 341 332 A1

FIG. 28

PWR

TRANSMISSION SIGNAL

FREQUENCY

UNNECESSARY BANDWIDTH

UNNECESSARY BANDWIDTH

# FIG. 29

(1)

(2)

EP 1 341 332 A1

## INTERNATIONAL SEARCH REPORT

| International application No. |
| --- |
| PCT/JP00/08598 |

**A. CLASSIFICATION OF SUBJECT MATTER**
Int.Cl⁷ H04J11/00
Int.Cl⁷ H04J13/00

According to International Patent Classification (IPC) or to both national classification and IPC

**B. FIELDS SEARCHED**

Minimum documentation searched (classification system followed by classification symbols)
Int.Cl⁷ H04J11/00
Int.Cl⁷ H04J13/00

Documentation searched other than minimum documentation to the extent that such documents are included in the fields searched
Jitsuyo Shinan Koho          1926-2001
Kokai Jitsuyo Shinan Koho    1971-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 10-247889, A (Toshiba Corporation), 14 September, 1998 (14.09.98), page 19, right column, lines 26 to 28; Fig. 1 | 1-7,17,18, 21-33,43,44, 47-52 |
| Y | (Family: none) | 13,39 |
| X | JP, 7-23022, A (NIPPON HOSO KYOKAI), 24 January, 1995 (24.01.95), Figs. 2, 3   (Family: none) | 8,9,34,35 |
| X | JP, 2000-332724, A (Mitsubishi Electric Corporation), 30 November, 2000 (30.11.00), page 3, lower right column, line 44 to page 4, left column, line 5; Fig. 1   (Family: none) | 10,11,36,37 |
| Y | | 12,15,19,20, 38,41,45,46 |
| X | JP, 10-135925, A (Advanced Digital Television Broadcasting), 22 May, 1998 (22.05.98), Fig. 1   (Family: none) | 10,11,36,37 |
| Y | | 12,15,19,20, 38,41,45,46 |
| Y | JP, 2000-315994, A (Alcatel Alsthom Companie Generale d'electricite), 14 November, 2000 (14.11.00), | 12,38 |

☒ Further documents are listed in the continuation of Box C.    ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 06 February, 2001 (06.02.01) | 13 February, 2001 (13.02.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP00/08598 |

C (Continuation). DOCUMENTS CONSIDERED TO BE RELEVANT

| Category* | Citation of document, with indication, where appropriate, of the relevant passages | Relevant to claim No. |
|---|---|---|
| | page 2, right column, lines 37 to 42    (Family: none) | |
| Y | JP, 9-321732, A (Aiphone Co., Ltd.),<br>12 December, 1997 (12.12.97),<br>Fig. 1   (Family: none) | 12,38 |
| Y | JP, 7-297817, A (Sekisui Chemical Co., Ltd.),<br>10 November, 1995 (10.11.95),<br>page 4, right column, lines 24 to 4    (Family: none) | 19,20,45,46 |
| Y<br>A | JP, 7-226724, A (Toshiba Corporation),<br>22 August, 1995 (22.08.95),<br>page 3, right column, lines 28 to 35; page 8, left column,<br>lines 5 to 18; Figs. 1, 9   (Family: none) | 13,15,39,41<br>14,16,40,42 |
| Y<br>A | JP, 11-261660, A (Hitachi Denshi, Ltd.),<br>24 September, 1999 (24.09.99),<br>page 3, right column, lines 33 to 39; Fig. 11<br>(Family: none) | 13,15,39,41<br>14,16,40,42 |

Form PCT/ISA/210 (continuation of second sheet) (July 1992)